# EUROPEAN PATENT SPECIFICATION

(11) **EP 4 156 010 B1**
(45) Date of publication and mention of the grant of the patent: **27.08.2025**
(21) Application number: 21812565.6
(22) Date of filing: 01.02.2021
(51) Int. Cl.: G06F 21/74, G06F 21/71, G06F 21/57, H04L 9/40

(54) **DATA PROCESSING METHOD AND DATA PROCESSING APPARATUS**
DATENVERARBEITUNGSVERFAHREN UND DATENVERARBEITUNGSVORRICHTUNG
PROCÉDÉ DE TRAITEMENT DE DONNÉES ET APPAREIL DE TRAITEMENT DE DONNÉES

(30) Priority: 27.05.2020 CN 202010464282
(43) Date of publication of application: 29.03.2023
(73) Proprietor: Shenzhen Yinwang Intelligent Technologies Co., Ltd., Shenzhen City, Guangdong 518129 (CN)
(72) Inventor: DENG, Liang, Shenzhen, Guangdong 518129 (CN); CHEN, Wei, Shenzhen, Guangdong 518129 (CN); TAO, Zhe, Shenzhen, Guangdong 518129 (CN)
(74) Representative: Gill Jennings & Every LLP
(86) International application number: PCT/CN2021/074696
(87) International publication number: WO 2021/238294

(56) References cited:
- CN-A- 104 318 182
- CN-A- 106 203 082
- CN-A- 107 194 287
- US-A1- 2009 328 066
- US-A1- 2013 091 568
- ADAM BELAY 1 GEORGE PREKAS 2 CHRISTOS KOZYRAKIS 1 1STANFORD UNIVERSITY ANA KLIMOVIC 1 SAMUEL GROSSMAN 1 EDOUARD BUGNION 2 2EPFL: "IX: A Protected Dataplane Operating System for High Throughput and Low Latency", 6 October 2014 (2014-10-06), pages 61 - 77, XP061024641, Retrieved from the Internet <URL:https://www.usenix.org/sites/default/files/osdi14_full_proceedings.pdf> [retrieved on 20141006]
- ANONYMOUS: "Address space layout randomization - Wikipedia", 2 December 2015 (2015-12-02), XP055363110, Retrieved from the Internet <URL:https://en.wikipedia.org/w/index.php?title=Address_space_layout_randomization&oldid=693416768> [retrieved on 20170407]

## Description

### TECHNICAL FIELD

This application relates to the field of communications technologies, and in particular, to a data processing method and a data processing apparatus.

### BACKGROUND

Currently, a network device includes a data plane and a control plane. The data plane (data plane) is mainly used to complete high-speed data processing and forwarding. The control plane (control plane) is used to control and manage running of all network protocols, and provide various network information and forwarding and query entries required for data processing and forwarding on the data plane.

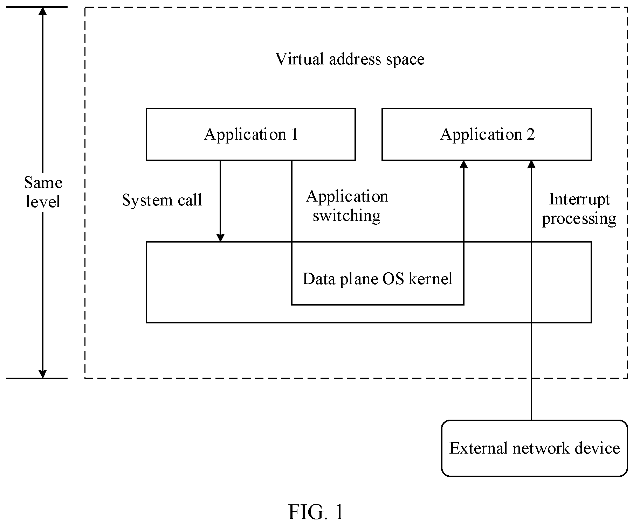

Based on an advanced reduced instruction set computing machine (advanced risc machine, ARM), a data plane (data plane) operating system (operating system, OS) architecture shown in FIG. 1 is proposed in the industry. As shown in FIG. 1, a data plane OS includes an application and a data plane OS kernel that manages the application. The application and the data plane OS kernel run at a same level (for example, an EL 1 of ARM-Av8), and are managed by a same memory management unit (memory management unit, MMU) page table (that is, the application and the data plane OS kernel run in a same virtual address space). Based on the data plane OS architecture, when system call, application switching, interrupt processing, or the like is performed in a running process of the data plane OS, there is no inefficient level switching or MMU page table switching between applications or between the application and the data plane OS kernel, so that a high-performance data plane OS can be implemented.

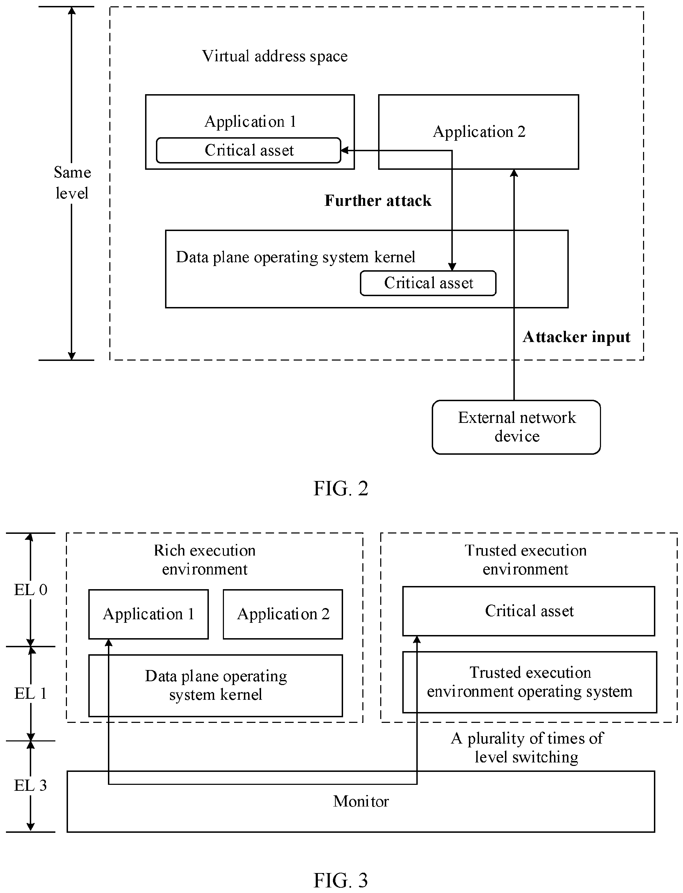

However, no security isolation mechanism is designed for the data plane OS architecture shown in FIG. 1, and a serious security risk exists. As shown in FIG. 2, the data plane OS may receive untrusted data from an external network device. Therefore, the data plane OS may face extensive attacks. An attacker may input malicious data from the outside to trigger a vulnerability and attack an application or a module of the data plane OS. Because the application and the data plane OS kernel run at the same level, once one point (for example, an application 2 in FIG. 2) is attacked, an attacker can attack the entire data plane OS. The data plane OS includes some critical assets that are not expected to be attacked, for example, a critical asset of an application 1 and a critical asset of a data plane OS kernel in FIG. 2. The critical asset includes, for example, critical data and/or critical code used to provide a security service. If the data plane OS is attacked, these critical assets may be leaked or tampered with, and severe security impact may be caused.

Therefore, how to protect integrity and privacy of a critical asset of a data plane OS is still an important problem that urgently needs to be resolved.

US 2013/091568 A1 discloses security systems that can provide secure and efficient in-VM monitoring. An exemplary security system can be built upon hardware virtualization features and can comprise a virtual machine having a plurality of standard virtual address spaces, as well as a hidden virtual address space. While the standard virtual address spaces can be directly accessible by a kernel in the virtual machine, the hidden virtual address space can be hidden from the kernel, which can be absent a virtual page table corresponding to the hidden virtual address space. A security monitor can reside in the hidden address space, monitoring the kernel without being modifiable by the kernel. A processor can transfer focus from the standard virtual address spaces to the hidden virtual address space only through predetermined entry gates, and the processor can transfer focus from the hidden virtual address space to the standard virtual address spaces only through predetermined exit gates.

ADAM BELAY et al., "IX: A Protected Dataplane Operating System for High Throughput and Low Latency", (20141006), pages 61 - 77, USENIX, USENIX, THE ADVANCED COMPUTING SYSTEMS ASSOCIATION, URL: https://www.usenix.org/sites/default/files/osdi14_full_proceedings.pdf, (20141006), XP061024641 discloses a data plane operating system that provides high I/O performance, while maintaining the key advantage of strong protection offered by existing kernels.

### SUMMARY

Embodiments of this application provide a data processing method and a data processing apparatus, to help protect integrity and privacy of a critical asset of a data plane OS.

According to a first aspect, the invention provides a data processing method according to appended claim 1

Based on this solution, an entry address pointing to the trusted component is stored in the first system register. Through configuration, code of the untrusted application and the data plane OS kernel does not include the first system instruction for accessing the first system register, but the intermediate component includes the first system instruction. When the application and/or the data plane OS kernel need/needs to provide a related service by invoking the critical asset component or the trusted computing base in a running process, the application and/or the data plane OS kernel can obtain the first virtual address only by invoking the intermediate component, and then enter the trusted component based on the first virtual address for secure execution. This helps hide an address of the trusted component. Because the application and the data plane OS kernel cannot obtain the entry address of the trusted component by executing the first system instruction, even if the untrusted component is attacked by an attacker, the attacker cannot enter the trusted component to steal or tamper with private critical data or critical code. This helps security isolation between the trusted component and the untrusted component, and ensures integrity and privacy of the critical asset of the data plane OS.

In a possible design, that the first system instruction is used to obtain a first virtual address from a first system register of the network device includes: The first system instruction is used to store, in a general-purpose register of the network device, the first virtual address read from the first system register. After the trusted component performs processing based on the first request, the method further includes: The intermediate component receives a second request sent by the trusted component, where the second request is used to feed back a processing result of the trusted component to the untrusted component; and the intermediate component deletes the first virtual address stored in the general-purpose register, and sends the processing result to the untrusted component.

Based on this solution, before returning to the untrusted component, the first virtual address remaining in the general-purpose register is cleared, to prevent the untrusted component or an attacker from obtaining the first virtual address by accessing the general-purpose register when a control flow is returned to the untrusted component, so as to avoid leakage of the first virtual address.

In a possible design, that the first request is used to access the trusted component includes: The first request is used to access the critical asset component. That the trusted component performs processing based on the first request includes: processing the first request based on the critical data and/or the critical code in the critical asset component.

Based on this solution, when the application or the data plane OS kernel requests to invoke the critical asset component to provide, for example, the security service, after the intermediate component is invoked to obtain the first virtual address, the control flow immediately enters the trusted component for security execution, to securely isolate the critical data and/or the critical code in the critical asset component from the untrusted component, so as to avoid attack on the critical data and/or critical code. For example, in a running process, the untrusted component relies on private user identity data to verify the user identity, and protects data security, but does not expect to disclose plaintext of the user identity data to the untrusted component. According to this solution, the critical data, that is, the user identity data, and the critical code related to identity authentication may be set in the trusted component. When the untrusted component requests identity authentication, the intermediate component may be invoked to provide ciphertext of the user identity data for the trusted component, decrypt the ciphertext and complete identity authentication by using the critical data in the trusted component or running corresponding critical code, and return an authentication result to the untrusted component.

The first request includes a request for accessing and/or modifying a memory management unit MMU page table of the data plane OS. Before the trusted component performs processing based on the first request, the method further includes: The trusted computing base determines that the request for accessing and/or modifying the MMU page table meets a preset verification condition. The verification condition includes: The request for accessing the MMU page table is not to access a first page table, where the first page table is used to map the trusted component; and the request for modifying the MMU page table is not to change an access permission attribute of the MMU page table. The access permission attribute of the MMU page table satisfies that access permission of a code area to which the MMU page table is mapped is being non-writable, and access permission of a data area to which the MMU page table is mapped is being non-executable.

Based on this solution, the access permission attribute of the MMU page table and an MMU management mechanism are configured to implement memory protection. All requests for the MMU page table are verified to implement page table control protection. If a request meets the verification condition, the request is considered valid and can be processed. If a request does not meet the verification condition, the request is considered invalid and cannot be processed. This ensures that an attacker cannot obtain the entry address of the trusted component by accessing the MMU page table of the trusted component, and ensures that an attacker cannot reintroduce malicious attacks by rewriting the code area or executing the data area.

In a possible design, a second system register of the network device points to an interrupt vector table configured by the trusted computing base. The interrupt vector table is used to indicate a processing program corresponding to an interrupt. The method further includes: If the interrupt occurs in the data plane OS, the untrusted component determines, based on the interrupt vector table, a component whose running is interrupted; and if the component whose running is interrupted is the untrusted component, the untrusted component executes, based on an indication of the interrupt vector table, an interrupt service program corresponding to the interrupt; or if the component whose running is interrupted is the trusted component and/or the intermediate component, before the untrusted component executes an interrupt service program corresponding to the interrupt, the untrusted component sends an interrupt processing request based on the indication of the interrupt vector table, where the first request includes the interrupt processing request. That the trusted component performs processing based on the first request includes: The trusted computing base stores an interrupt context based on the interrupt processing request.

Based on this solution, the interrupt can be intercepted in time by using the interrupt vector table (which may also be referred to as a shadow interrupt vector table) configured by the trusted computing base, and the control flow can enter the trusted computing base to securely store the interrupt context, to prevent leakage of the first virtual address or tampering of data and/or code in the trusted component when a data plane OS interrupt occurs in a running process of the trusted component and/or the intermediate component.

In a possible design, the processing result of the trusted component includes a processing result of the trusted computing base for the interrupt context; and/or the first request further includes an interrupt return request.

Based on this solution, it can be ensured that the first virtual address in the general-purpose register is deleted before returning to the data plane OS kernel to execute the interrupt service program, to prevent the untrusted component or the attacker from obtaining the first virtual address by accessing the general-purpose register when the control flow is returned to the untrusted component, so as to avoid disclosure of the first virtual address. Even if the interrupt context needs to be restored by returning the control flow from the data plane OS kernel to the trusted computing base, the intermediate component needs to be invoked again to enter the trusted component, to implement security isolation between the trusted component and the untrusted component as comprehensively as possible, so as to protect privacy and integrity of the data and/or the code in the trusted component.

In a possible design, the data plane OS further includes a loader. The loader is configured to load an executable file of the data plane OS into memory of the network device during device initialization. The method further includes: During device start, the loader loads content of the trusted component onto the first virtual address by using a virtual address randomly selected from a virtual address space of the data plane OS as the first virtual address, and stores the first virtual address in the first system register; and the trusted computing base initializes the MMU page table, maps the virtual address in the virtual address space to the memory, and configures the access permission attribute of the MMU page table. The access permission attribute of the MMU page table satisfies that the access permission of the code area to which the MMU page table is mapped is being non-writable, and the access permission of the data area to which the MMU page table is mapped is being non-executable.

Based on this solution, each time the device is started, the content of the trusted component is loaded to the virtual address randomly selected from the virtual address space, so that the entry address of the trusted component is randomly hidden in the virtual address space. In addition, the access permission attribute of the MMU page table is configured to protect the memory, to ensure that an attacker cannot reintroduce malicious attacks by rewriting the code area or executing the data area.

According to a second aspect, the invention provides a data processing apparatus according to appended claim 7.

In a possible design, that the first system instruction is used to obtain a first virtual address from a first system register of a network device includes: The first system instruction is used to store, in a general-purpose register of the network device, the first virtual address read from the first system register. After the trusted component performs processing based on the first request, the intermediate component is configured to: receive a second request sent by the trusted component, where the second request is used to feed back a processing result of the trusted component to the untrusted component; and delete the first virtual address stored in the general-purpose register, and send the processing result to the untrusted component.

In a possible design, that the first request is used to access the trusted component includes: The first request is used to access the critical asset component. That the trusted component performs processing based on the first request includes: processing the first request based on the critical data and/or the critical code in the critical asset component.

The first request includes a request for accessing and/or modifying a memory management unit MMU page table of a data plane OS. Before the trusted component performs processing based on the first request, the trusted computing base is configured to: determine that the request for accessing and/or modifying the MMU page table meets a preset verification condition. The verification condition includes: The request for accessing the MMU page table is not to access a first page table, where the first page table is used to map the trusted component; and the request for modifying the MMU page table is not to change an access permission attribute of the MMU page table. The access permission attribute of the MMU page table satisfies that access permission of a code area to which the MMU page table is mapped is being non-writable, and access permission of a data area to which the MMU page table is mapped is being non-executable.

In a possible design, a second system register of the network device points to an interrupt vector table configured by the trusted computing base. The interrupt vector table is used to indicate a processing program corresponding to an interrupt. The untrusted component is configured to: if the interrupt occurs in the data plane OS, determine, based on the interrupt vector table, a component whose running is interrupted; and if the component whose running is interrupted is the untrusted component, execute, based on an indication of the interrupt vector table, an interrupt service program corresponding to the interrupt; or if the component whose running is interrupted is the trusted component and/or the intermediate component, before the untrusted component executes an interrupt service program corresponding to the interrupt, send an interrupt processing request based on the indication of the interrupt vector table, where the first request includes the interrupt processing request. That the trusted component performs processing based on the first request includes: The trusted computing base stores an interrupt context based on the interrupt processing request.

In a possible design, the processing result of the trusted component includes a processing result of the trusted computing base for the interrupt context; and/or the first request further includes an interrupt return request.

In a possible design, the apparatus further includes a loader. The loader is configured to load an executable file of the data processing apparatus into memory of the network device during device initialization. During device start, the loader loads content of the trusted component onto the first virtual address by using a virtual address randomly selected from a virtual address space of the data processing apparatus as the first virtual address, and stores the first virtual address in the first system register. The trusted computing base is further configured to: initialize the MMU page table, map the virtual address in the virtual address space to the memory, and configure the access permission attribute of the MMU page table. The access permission attribute of the MMU page table satisfies that the access permission of the code area to which the MMU page table is mapped is being non-writable, and the access permission of the data area to which the MMU page table is mapped is being non-executable.

According to a third aspect, the invention provides a computer-readable storage medium. The computer-readable storage medium stores a computer program. When the computer program is run on a computer, the computer is enabled to perform the method according to the first aspect of this application.

In this application, based on the implementations provided in the foregoing aspects, the implementations may be further combined to provide more implementations.

### BRIEF DESCRIPTION OF DRAWINGS

FIG. 1 is a schematic diagram of a logical architecture of a high-performance data plane OS in the conventional technology;
FIG. 2 is a schematic diagram of a security risk of the data plane OS in FIG. 1;
FIG. 3 is a schematic diagram of a principle of a TrustZone isolation technology;
FIG. 4 is a schematic diagram of a principle of a virtual isolation technology;
FIG. 5 is a schematic diagram of a logical architecture of a data plane OS according to an embodiment of this application;
FIG. 6 is a schematic diagram of a principle of an address hiding and protection mechanism according to an embodiment of this application;
FIG. 7 is a schematic diagram of a principle of an intermediate component protection mechanism according to an embodiment of this application;
FIG. 8 is a schematic diagram of a self-protection closed loop according to an embodiment of this application;
FIG. 9 is a schematic diagram of a data processing procedure in a 5G base station scenario according to an embodiment of this application;
FIG. 10 is a schematic diagram of a data processing apparatus according to an embodiment of this application; and
FIG. 11 is a schematic diagram of a network device according to an embodiment of this application.

### DESCRIPTION OF EMBODIMENTS

The following explains some terms in embodiments of this application, to help understanding of a person skilled in the art.
(1) Privileged level: An ARM architecture server includes four exception levels (Exception level), which are referred to as an EL 0 to an EL 3 for short. The EL 0 is an unprivileged (unprivileged) level, the EL 1 is an operating system kernel mode (OS kernel mode), the EL 2 is a hypervisor level (hypervisor mode), and the EL 3 is a monitor level (monitor mode). A privileged level of an EL n increases as n increases. In embodiments of this application, the privileged level is the EL 1.
(2) MMU page table: A memory management unit MMU is a special data structure that needs to be used to complete conversion from a virtual address space to a physical address space, is placed in a page table area of a system space, and stores a correspondence between a logical page and a physical page frame. A user generates only logical addresses and an address space of a process is considered to ranging from 0 to max. Physical addresses range from R + 0 to R + max, where R is a base address. Address mapping is a process of converting a logical address used in a program address space into a physical address in memory.
(3) Trusted component: a component that can be trusted and that is of a data plane OS
   In embodiments of this application, a trusted component may include a critical asset that needs privacy protection and that is on a data plane and a trusted computing base (trusted computing base, TCB, briefly referred to as a trusted base below). The critical asset may include a critical asset on an application side and a critical asset on a data plane OS kernel side or another critical asset of the data plane OS. The critical asset may include but is not limited to critical data and/or critical code for operating the critical data. The trusted base is a set of all security protection mechanisms that implement security protection for the data plane OS. In embodiments of this application, the trusted base is configured to implement a page table management and control function and an interrupt processing control function of the data plane OS, or another function related to the security protection mechanism.
(4) Untrusted component: An untrusted component of the data plane OS includes a component of the data plane OS other than a trusted component and an intermediate component, for example, an application and a data plane OS kernel that manages the application.
(5) Intermediate component (gateway): an intermediate component used for security isolation between a trusted component and an untrusted component of the data plane OS. The intermediate component includes a plurality of instruction sequences. The plurality of instruction sequences enable the intermediate component to be called, and implement secure interaction between the trusted component and the untrusted component. In embodiments of this application, the intermediate component uniquely includes a first system instruction for accessing a special first system register of a network device, the first system register stores a first virtual address, and the first virtual address points to the trusted component.
(6) Trusted execution environment: In embodiments of this application, a trusted execution environment is a running environment of a trusted component, and is a secure environment. The trusted execution environment implemented in embodiments of this application is different from a secure environment TEE implemented based on a hardware isolation mechanism in a TrustZone isolation technology and a virtualization isolation technology, and does not require hardware isolation.

It should be understood that, unless otherwise stated in this application, "/" means or. For example, A/B may represent A or B. The term "and/or" is merely an association relationship for describing associated objects, and indicates that three relationships may exist. For example, A and/or B may represent the following three cases: Only A exists, both A and B exist, and only B exists. In addition, in this application, "a plurality of" means two or more. For example, at least one of a, b, or c may represent seven cases: a, b, c, a and b, a and c, b and c, or a, b and c.

In this application, "example", "in some embodiments", "in some other embodiments", or the like is used to represent giving an example, an illustration, or a description. Any embodiment or design scheme described as an "example" in this application should not be explained as being more preferred or having more advantages than another embodiment or design scheme. Specifically, the term "example" is used for presenting a concept in a specific manner.

It should be noted that, in this application, the terms "first", "second", and the like are only used for a purpose of distinguishing for description, but should not be understood as an indication or implication of relative importance or an indication or implication of a sequence.

Before embodiments of this application are described below, a related conventional technology is first described.

Currently, for a device security problem, solutions in the industry include separating a critical asset from other parts of a data plane by using, for example, a TrustZone isolation technology or a virtualization isolation technology, so that the critical asset runs independently in a secure environment. However, these isolation manners are not applicable to a high-performance data plane OS scenario shown in FIG. 1.

Specifically, the TrustZone isolation technology is a hardware isolation mechanism supported by an ARM. As shown in FIG. 3, hardware and software resources on a system on a chip (system of chip, SoC) are divided into two areas: a trusted execution environment (trusted execution environment, TEE) and a rich execution environment (rich execution environment, REE), by using the TrustZone isolation technology. A critical asset is separated from a data plane, and independently runs on a TEE OS in the TEE, so that a security-sensitive operation is performed in the TEE, and another operation is performed in the REE. During system running, conversion is performed between the TEE and the REE by using a monitor (monitor). The REE cannot interfere with execution in the secure environment TEE, and integrity and privacy of hardware and software resources in the TEE cannot be damaged. Therefore, high security isolation can be provided. However, because an application runs at an EL 0 with lowest permission, a data plane OS kernel that manages the application runs at an EL 1 with higher permission, and the monitor (monitor) runs at an EL 3 with higher permission, when the application and/or the data plane OS kernel running in the REE need/needs to access the critical asset running in the TEE, there are a plurality of times of privileged level switching from the application to the data plane OS kernel, from the data plane OS kernel to the monitor, from the monitor to the TEE OS, from the TEE OS to the critical asset, and the like. This is inefficient, causes great performance overheads, and is not applicable to the high-performance data plane OS scenario in FIG. 1. In addition, in this method, because the critical asset needs to be separated from the data plane and then independently run in the secure environment, the existing application needs to be greatly modified, which severely affects existing services.

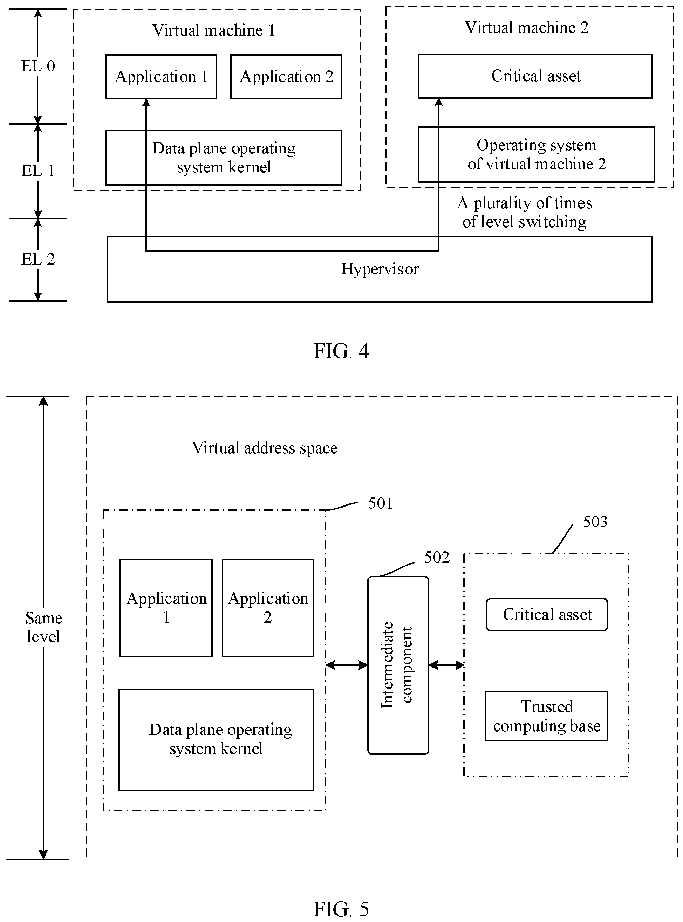

The virtualization isolation technology is also an isolation mechanism supported by an ARM. Based on hardware-assisted virtualization and a hypervisor (hypervisor) running at a virtualization level, the virtualization isolation technology isolates and abstracts hardware resources such as a central processing unit (central processing unit, CPU), memory, and a device, and provides a virtualized resource view and an independent running environment for an upper-level virtual machine. As shown in FIG. 4, when this method is used, based on CPU virtualization and memory virtualization technologies, a critical asset and another part of a data plane need to run on different virtual machines. For example, an application and a data plane OS kernel run on a virtual machine 1, and a critical asset runs on a virtual machine 2. When the application or the data plane OS kernel running on the virtual machine 1 needs to access the critical asset running on the virtual machine 2, the application or the data plane OS kernel needs to first enter a hypervisor (hypervisor) and then switch to the virtual machine 2. Different virtual machines cannot interfere with each other or damage the integrity and privacy of each other, and therefore high isolation can be provided. However, because the critical asset and the another part of the data plane run in different virtual machines, when the another part of the data plane needs to access the critical asset, there are a plurality of times of privileged level switching from the application to the data plane OS kernel, from the data plane OS kernel to the hypervisor, from the hypervisor to an operating system OS of the virtual machine 2, and from the OS of the virtual machine 2 to the critical asset. This is inefficient, causes great performance overheads, and is not applicable to a high-performance data plane scenario. In addition, in this method, because the critical asset needs to be separated from the data plane and run on another virtual machine, the existing application needs to be greatly modified, which severely affects existing services.

In view of this, this application provides a data processing solution that can be applied to a data plane operating system OS of a network device. According to this data processing solution, a lightweight trusted execution environment (that is, a running environment of a trusted component) can be constructed, and an entry address of the trusted execution environment is hidden, to ensure security isolation between a trusted component and an untrusted component, so that the trusted component cannot be stolen or tampered with by the untrusted component. Through configuration and based on a plurality of protection mechanisms, even if the untrusted component is attacked, integrity and privacy of data and/or code in the trusted component cannot be damaged. In addition, compared with the high-performance data plane OS architectures shown in FIG. 1 and FIG. 2, this solution does not add additional level switching or MMU page table switching, and almost does not affect high performance of the data plane OS. In addition, a critical asset does not need to be separated from a data plane, an existing application is compatible, and an existing service is not affected. This solution can protect the integrity and privacy of the critical asset of the data plane OS while ensuring high performance of the data plane OS.

The following describes the technical solutions of this application in detail with reference to the accompanying drawings and specific embodiments.

FIG. 5 is a diagram of a logical architecture of a data plane operating system OS according to an embodiment of this application. The data plane OS is applicable to a network device or another device, including but not limited to a computer (a personal computer and/or a server), a base station, a switch, a bridge, a router, a vehicle-mounted device, and the like. This is not limited in this application. It should be understood that the logical architecture is merely logical division of components or functional modules of a device, and the logical architecture may also be applicable to any other appropriate device or module running in a same virtual address space. This is not limited in this application.

As shown in FIG. 5, components of the data plane OS are divided into an untrusted component 501, an intermediate component (gateway) 502, and a trusted component 503 based on functions.

The untrusted component is untrusted, and may include another data plane component other than a trusted component and an intermediate component of the data plane OS, for example, may include one or more applications and a data plane OS kernel.

The trusted component 503 may include a critical asset component and a trusted computing base (briefly referred to as a trusted base below). The critical asset component includes, for example, critical assets of a plurality of applications (for example, an application 1 and an application 2 in FIG. 5) of the data plane OS, and a critical asset of the data plane OS kernel. In this embodiment of this application, the critical asset may specifically include, for example, critical data and/or critical code used for a security service. The critical data may be data that is on the data plane and that needs privacy protection, and may also be referred to as sensitive data, including, for example, a user message, user Internet access data, and a key in a 5G base station scenario. The critical code may be code that is of the data plane OS, that requires privacy protection, and that is not expected to be attacked. When the critical code is run, some sensitive operations of the data plane OS can be implemented. For example, in a 5G base station scenario, the critical code includes code for implementing base station operations such as a packet data convergence protocol (Packet Data Convergence Protocol, PDCP) decryption operation, a plaintext processing operation, an Internet protocol security (Internet Protocol Security, IPSEC) encryption operation, and key management.

It should be understood that, in this embodiment of this application, functional modules of the operating system are divided as "trusted" and "untrusted" only from a perspective of device security. If a module in the trusted component has a security risk, security of the entire operating system is compromised. The untrusted component relates to only low-level related permission assigned by a system security policy, and a problem of the untrusted component has low impact on security of the entire operating system. During specific implementation, the trusted component and/or the untrusted component may include but be not limited to the components and sub-modules of the components shown in FIG. 5. In this embodiment of this application, FIG. 5 is merely used as an example to describe in detail the technical solution of this application. The technical solution may also be applicable to another scenario. This is not limited in this application.

The intermediate component is set to implement security isolation between the trusted component and the untrusted component. The intermediate component may include one or more preset system instructions. When the intermediate component is called, the one or more system instructions can be executed, to implement secure information exchange between the trusted component and the untrusted component, so as to ensure that the untrusted component cannot enter the trusted component to steal or tamper with data or code. In this embodiment of this application, the intermediate component may be at a same protection level as the trusted component. In other words, the intermediate component further needs to be protected from being attacked. Details are described below.

Same as those in the architecture of the data plane OS shown in FIG. 2, components of the data plane OS shown in FIG. 5 all run at a same level (for example, an EL 1), and the components of the data plane OS use a same MMU page table, that is, run in a same virtual address space. Calling between components is implemented in a manner of native function calling. In a process in which the data plane OS runs and performs high-speed data processing and forwarding, when there is, for example, a system call, application switching, or interrupt processing, there is no overhead of inefficient level switching (for example, between an EL 0, an EL 1, an EL 2, and an EL 3) or inefficient address space switching. In this way, a lightweight running environment can be implemented, and high performance of the data plane can be ensured. In addition, compared with the data plane OS architecture shown in FIG. 2, in the data plane OS architecture shown in FIG. 5, content (including data, code, and the like) of a critical asset of the data plane OS can be placed in a separate secure section (secure section) by modifying/compiling a link script file, and loading logic of the data plane OS can be configured, so that during device start, the content of the critical asset is obtained from the secure section by using a loader and loaded to a randomly selected virtual address in the virtual address space, and a plurality of protection mechanisms are implemented by configuring functions of the intermediate component and the trusted base. In this way, security isolation between the trusted component and the untrusted component can be implemented, and privacy and integrity of the critical asset and/or the trusted computing base in the trusted component can be protected.

To protect integrity and privacy of the critical asset of the data plane OS while ensuring high performance of the data plane OS, embodiments of this application provide a plurality of protection mechanisms such as an address space hiding and protection mechanism, an intermediate component protection mechanism, a privileged level self-protection mechanism, and an interrupt processing protection mechanism. Protection at levels implements security isolation of the trusted component, prevents the trusted component of the data plane OS from being attacked as much as possible, and ensures integrity and privacy of the data and/or code in the trusted component.

The following separately describes a principle of each protection mechanism with reference to the accompanying drawings.

### 1. Address space hiding and protection mechanism

The address space hiding and protection mechanism is a mechanism that specifies an entry address of a trusted component and randomly "hides" the entry address in a virtual address space of a data plane OS, to implement security isolation of the trusted component.

In this embodiment of this application, an executable file of the data plane OS may be obtained through modification and compilation of a compiler in advance in a static compilation phase, to implement configuration logic, loading logic, and running logic of each component of the data plane OS. During device start, a virtual address randomly selected from a virtual address space of the data plane OS by using a loader may be used as a first virtual address, and content of the trusted component is loaded, by using the loader, to an address to which the first virtual address points. The first virtual address may point to an address table, and the address table includes addresses of a critical asset and a trusted base. The first virtual address is stored in a special first system register (for example, CNTV_CVAL_EL0 (counter-timer virtual timer compare value register for EL0) on an ARM-Av8 platform) of a network device, and a first system instruction used to access the first system register is uniquely stored in an intermediate component.

In a running process of an untrusted component, if the untrusted component needs to access the trusted component, the untrusted component can obtain the first virtual address from the first system register only by calling the intermediate component, to enter the trusted component for secure execution. This helps implement address hiding of the trusted component. Because an application and a data plane OS kernel cannot learn of the entry address of the trusted component by executing the first system instruction, even if the untrusted component is attacked by an attacker, the attacker cannot enter the trusted component to steal or tamper with private critical data or critical code. This helps security isolation between the trusted component and the untrusted component, and ensures integrity and privacy of the critical asset of the data plane OS.

Therefore, address hiding of the trusted component is implemented based on the address space hiding and protection mechanism, so that even if the untrusted component is attacked, an attacker cannot obtain the entry address of the trusted component by executing the first system instruction, and therefore cannot steal or tamper with the data and the code in the trusted component. This ensures integrity and privacy of the data and the code in the trusted component.

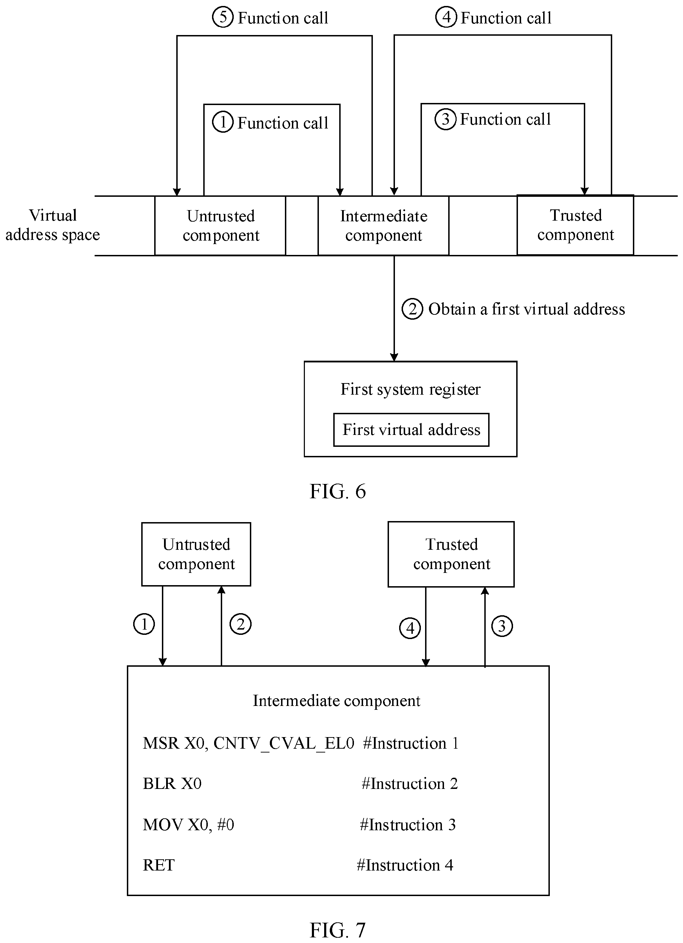

As shown in FIG. 6, in a running process of the untrusted component, the untrusted component needs to rely on the trusted component to provide a related service, for example, a security service such as plaintext processing, encryption, decryption, and key management, and a service such as page table management and interrupt processing. In a running process of the untrusted component, if the untrusted component needs to access the critical asset and/or the trusted base in the trusted component, the untrusted component enters the intermediate component through function calling in ①. The intermediate component executes the first system instruction in ② to read the first virtual address from the first system register of the network device, and stores the first virtual address in a general-purpose register (for example, X0) of the network device. Then, the intermediate component transfers, through function calling in ③, a related request to an address to which the first virtual address in the general-purpose register points, to enter the trusted component for execution, so as to call the critical asset and/or the trusted base to complete corresponding program execution, for example, running the critical code to provide a security service, performing page table management and control, or performing interrupt processing control. After corresponding program execution is completed in the trusted component, the trusted component returns to the intermediate component through function calling in ④. After deleting the first virtual address that may remain in the general-purpose register, the intermediate component returns a processing result of the trusted component to the untrusted component through function calling in ⑤. The processing result includes but is not limited to a processing result obtained when the untrusted component requests to call the critical asset to provide the security service, a result obtained when the untrusted component requests to call the trusted base to perform page table management, and a result obtained when the untrusted component requests to call the trusted base to perform interrupt processing. The untrusted component continues to run based on the processing result of the trusted component, to perform high-speed data forwarding and processing.

For example, in a running process, the untrusted component relies on the critical data and/or the critical code to verify a user identity. In addition, to protect data security, a plaintext of user identity data is not expected to be leaked to the untrusted component. According to the foregoing address space hiding and protection mechanism, the critical data and/or the critical code may be stored in the trusted component, including a critical data key, code of critical operations such as decryption and authentication, and the like. If the untrusted component needs to verify the user identity during running, the untrusted component calls the intermediate component to provide a ciphertext of the user identity data to a critical asset component. The critical asset component decrypts the ciphertext and completes identity authentication by executing corresponding code, and returns an authentication result to the untrusted component. Correspondingly, the untrusted component executes a further data processing and/or forwarding process based on whether the user identity verification is successful.

Therefore, the entry address of the trusted component is hidden in the virtual address space by using the address space hiding and protection mechanism. Because the untrusted component cannot directly access the trusted component, and cannot learn of the entry address of the trusted component by executing the first system instruction, even if the untrusted component has a security risk or the untrusted component is attacked, an attacker cannot use the untrusted component to enter the trusted component to steal or tamper with the critical data and the critical code. This ensures privacy and integrity of data and code in the trusted component.

### 2. Intermediate component protection mechanism

Because an intermediate component includes a first system instruction for accessing a first system register, the intermediate component still has a security risk. An attacker may maliciously use the intermediate component to steal an entry address of a trusted component, and bypass the foregoing address space hiding and protection mechanism. Therefore, to prevent the intermediate component from being maliciously used, an embodiment of this application provides an intermediate component protection mechanism.

As shown in FIG. 7, an intermediate component may include a plurality of instruction sequences, for example, an instruction 1, an instruction 2, an instruction 3, and an instruction 4.

The instruction 1 may be a transfer instruction from a general-purpose register to the first system register, for example, MSR X0, CNTV_CVAL_EL0, indicating that the instruction 1 is to execute an MSR system instruction to access the first system register (for example, CNTV_CVAL_EL0) of a network device to read a first virtual address, and write the first virtual address into the general-purpose register (for example, X0) of the network device.

The instruction 2 may be a jump instruction to an address specified by an Xm target register, for example, BLR X0, indicating that the instruction 2 is to execute a BLR instruction to jump to an address (that is, the first virtual address) in the general-purpose register (for example, X0) of the network device, and enter the trusted component for execution.

The instruction 3 may be a data transfer instruction, for example, MOV X0, #0, indicating that the instruction 3 is to execute an MOV instruction to clear the general-purpose register (for example, X0).

The instruction 4 may be a jump instruction to an address specified by an Xm target register, and indicate a subroutine return, for example, RET, indicating that the instruction 4 is to execute a RET instruction to return to the untrusted component to continue execution.

The instruction sequence in the intermediate component may ensure that after the first system instruction for accessing the first system register of the network device is executed, a control flow immediately enters the trusted component for secure execution. In addition, before the untrusted component is returned, the instruction 3 is executed to clear the remaining first virtual address in the general-purpose register, to prevent an attacker from accessing the general-purpose register by using the untrusted component to obtain the remaining first virtual address after the control flow is returned to the untrusted component, so as to avoid leakage of the entry address of the trusted component. In this way, even if an attacker attacks the untrusted component, because the first virtual address in the general-purpose register is cleared, the untrusted component cannot obtain the entry address of the trusted component by using the intermediate component, so that malicious use of the intermediate component can be avoided.

It should be understood that the foregoing instruction sequence and functional implementation of the instruction sequence are merely examples for description rather than any limitation. In another embodiment, the general-purpose register may be any register in X0 to X29, and a specific instruction of each instruction sequence may vary based on an application scenario or a service requirement. This is not limited in this embodiment of this application.

### 3. Level self-protection mechanism

In embodiments of this application, because the data plane OS runs at a same level (for example, an EL 1) entirely and uses a same MMU page table for memory management, if an attacker attacks the data plane OS, the attacker may maliciously construct a system instruction or access/modify the MMU page table, to bypass the address hiding and protection mechanism and the intermediate component protection mechanism in this application. Therefore, an embodiment of this application further provides a level self-protection mechanism, including a self-protection closed loop formed by three aspects: system instruction elimination, page table control, and memory protection. This ensures that even if the data plane OS runs at a same level (for example, a same privileged level), an attacker cannot maliciously enter the trusted component by executing the eliminated system instruction, maliciously constructing a system instruction, or maliciously accessing/modifying the MMU page table to tamper with or steal the critical data and/or the critical code, so that security isolation protection for the trusted component can be implemented.

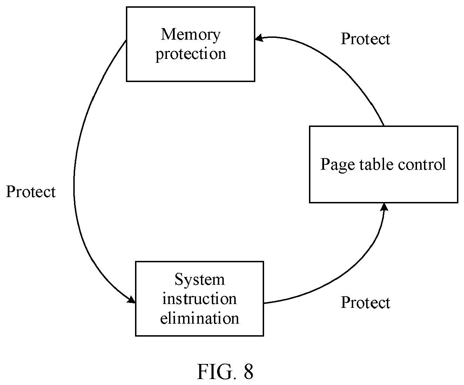

The following describes the self-protection closed loop in this application with reference to FIG. 8. It should be understood that the following separately describes the three aspects only for ease of understanding, and arrows shown in the figure are merely logical illustration of protection mechanisms in the three aspects, but do not limit functional implementation of the three aspects.

As shown in FIG. 8, a protection mechanism based on system instruction elimination is first described.

In this embodiment of this application, the system instruction elimination may include elimination of the system instruction that is in the untrusted component and that is used to access the trusted component, including elimination of the system instruction that is in the untrusted component and that is used to access the trusted component in a static compilation phase, and elimination of the system instruction that is in the untrusted component and that is used to access the trusted component in a system running phase. Specifically, in the static compilation phase, the code of the untrusted component is scanned and verified by using a compiler, to ensure that the code of the untrusted component does not include the first system instruction used to access the first system register of the network device. In addition, during system running, the first system instruction triggered by the untrusted component cannot be executed, and a system instruction of, for example, a translation table base register (translation table base register, TTBR) in the code of the untrusted component is also replaced with a function call for the intermediate component, to ensure as comprehensively as possible that the code of the untrusted component does not include the first system instruction.

The protection mechanism based on system instruction elimination ensures as far as possible that only the code of the intermediate component includes the first system instruction for accessing the first system register and only the first system instruction in the intermediate component can be executed. When the untrusted component needs to access the critical asset and/or the trusted base, the untrusted component can transfer a related request to the intermediate component only through function calling of the intermediate component, and the intermediate component executes the first system instruction to obtain the first virtual address from the first system register. Then, the related request of the untrusted component is migrated to the trusted component for secure execution. In this way, even if the untrusted component is attacked and the attacker maliciously constructs the first system instruction, the first system instruction is not executed, and the attacker cannot steal or tamper with the data and the code in the trusted component by maliciously constructing the first system instruction to access the trusted component, so that security isolation protection for the trusted component can be implemented.

Next, a protection mechanism based on page table control is introduced.

Because the memory management unit (memory management unit, MMU) page table includes mapping from all virtual addresses to physical addresses, if an attacker can read the MMU page table, the attacker can obtain the entry address of the trusted component, that is, the first virtual address. Consequently, security isolation protection for the trusted component cannot be truly implemented. Therefore, the MMU page table also needs to be protected.

According to the protection mechanism based on page table control in this embodiment of this application, the MMU page table of the data plane OS is also randomly stored in a randomly selected virtual address in the virtual address space of the data plane OS, and randomized address information of the MMU page table is stored in an address table to which the first virtual address points. Therefore, the randomized address information of the MMU page table is also stored in the first system register of the network device, so that the untrusted component cannot directly access and/or modify the MMU page table, and cannot obtain the first virtual address from the MMU page table. In this way, the MMU page table is randomly hidden in the virtual address space of the data plane OS. In addition, the trusted base is further configured to fully implement a page table management function of the data plane OS and a function of verifying a request for accessing and/or modifying the MMU page table. If the untrusted component needs to access and/or modify the MMU page table in a running process, the untrusted component also needs to obtain the first virtual address by calling the intermediate component, and then send the request for accessing and/or modifying the MMU page table to the trusted component in the manner shown in FIG. 6, to enter the trusted component. The trusted base securely performs related processing on the request for accessing and/or modifying the MMU page table.

The trusted base first verifies the request for accessing and/or modifying the MMU page table of the data plane OS, to determine whether the request for accessing and/or modifying the MMU page table of the data plane OS by the untrusted component meets a preset verification condition. After successfully verifying the request for accessing and/or modifying the MMU page table, the trusted base may execute the access and/or modification of the MMU page table. After a program for accessing and/or modifying the MMU page table is run, the trusted base may call the intermediate component to return a page table access result and/or a page table modification result to the untrusted component. The verification condition includes: The request for accessing the MMU page table does not access a first page table, where the first page table is used to map the trusted component; the request for modifying the MMU page table does not change an access permission attribute of the MMU page table, where the access permission attribute of the MMU page table satisfies that access permission of a code area to which the MMU page table is mapped is being non-writable, and access permission of a data area to which the MMU page table is mapped is being non-executable. Therefore, validity of the request for accessing and/or modifying the MMU page table is verified by using the trusted base. If the verification condition is met, it is considered that the request is valid, or if the verification condition is not met, it is considered that the request is invalid. Therefore, the request for accessing the MMU page table does not access the first page table mapped to the trusted component, to ensure that an attacker cannot obtain the entry address of the trusted component by accessing the MMU page table. In addition, this can further ensure that a system instruction used to rewrite the code area or execute the data area is not executed. In this way, an attacker cannot introduce an attack by reintroducing a maliciously constructed first system instruction in a manner of rewriting the code area or executing the data area.

Therefore, according to the protection mechanism based on page table control, in a running process of the untrusted component, if the untrusted component requests to access and/or modify the MMU page table of the data plane OS, the untrusted component can only obtain the first virtual address by calling the intermediate component, and call the trusted base based on the first virtual address to perform security processing. This prevents an attacker from simply reading the MMU page table to obtain a randomized entry address of the trusted component, so that security isolation protection for the MMU page table can be implemented. In addition, because the code of the untrusted component is eliminated and does not include the system instruction of the translation table base register TTBR, the attacker cannot switch the current page table by using the translation table base register to maliciously replace the page table used by the data plane OS with another page table that is not randomly protected. In addition, the trusted base is used to verify the validity of the management request for the MMU page table. This ensures that an attacker cannot obtain the entry address of the trusted component by accessing the MMU page table or tamper with the memory to maliciously construct a system instruction.

Then, a protection mechanism based on memory protection is introduced.

Memory protection means that the access permission attribute is configured by using a permission control bit in the MMU page table, so that the access permission attribute of the MMU page table satisfies that access permission of a code area to which the MMU page table is mapped is being non-writable, and access permission of a data area to which the MMU page table is mapped is being non-executable. Therefore, a memory mapping attribute of the entire virtual address space of the data plane OS satisfies that the data area is mapped as non-executable and the code area is mapped as non-writable. In this way, the protection mechanism based on system instruction elimination ensures that an attacker cannot maliciously construct a system instruction by rewriting the code area or executing the data area to reintroduce a malicious attack, so that memory security protection can be implemented.

Because the protection mechanism based on system instruction elimination is set, a related system instruction of the untrusted component for the trusted component is not executed, and the untrusted component cannot obtain the entry address of the trusted component or directly access the trusted component, so that security isolation of the trusted component is implemented. Because the protection mechanism based on page table control is set, a request for accessing the MMU page table and/or a request for modifying the MMU page table that do/does not meet the verification condition are/is considered invalid and cannot be processed. This ensures that a page table used by the data plane OS cannot be maliciously replaced with another page table that is not randomly protected to steal the entry address of the trusted component, and an attack cannot be reintroduced by rewriting the code area or executing the data area. Because the memory protection is set, the corresponding code area in the memory cannot be written, and the data area cannot be executed. This ensures that the untrusted component cannot maliciously introduce an eliminated system instruction by modifying the code area of the untrusted component or executing the data area of the untrusted component in a running process, and prevents the protection mechanism based on system instruction elimination from being bypassed.

Therefore, the self-protection closed loop formed by the protection mechanisms in the three aspects can implement level self-protection of the data plane OS, so that even if all components of the data plane OS run at the privileged level at the same time, content in the trusted component cannot be tampered with or stolen by executing the system instruction or accessing and/or modifying the MMU page table. This ensures security isolation of the trusted component as comprehensively as possible, and further ensures integrity and privacy of the data and/or the code in the trusted component.

### 4. Interrupt processing protection mechanism

The interrupt processing protection mechanism means that the trusted base configures an interrupt vector table to which a second system register (for example, an interrupt vector base address register, including but not limited to an interrupt vector base address register (vector base address register, VBAR) on an ARM-Av8 platform) of the network device points, so that when an interrupt occurs in the data plane OS, the trusted base can intercept the interrupt and securely store a context of the intermediate component and/or the trusted component that are/is interrupted. This prevents leakage of the first virtual address or tampering of data and/or code in the trusted component when the interrupt occurs in the data plane OS in a running process of the trusted component and/or the intermediate component. The system instruction requesting to access the second system register is also eliminated by executing the system instruction in the static compilation phase, to ensure that an attacker cannot maliciously modify the second system register.

In an embodiment, the untrusted component may configure a second interrupt vector table. The second interrupt vector table may be used to indicate interrupt service programs corresponding to different types of interrupts. For example, a data plane OS kernel executes a data packet forwarding service. The trusted base may configure a first interrupt vector table. The first interrupt vector table may also be referred to as a shadow interrupt vector table of the second interrupt vector table. The first interrupt vector table may be used to indicate a processing program corresponding to an interrupt, including but not limited to a program for determining a component whose running is interrupted, a secure storage program for an interrupt context, and determining an interrupt service program.

The second system register may point to the first interrupt vector table. The untrusted component may determine, by reading the second system register, that an interrupt occurs in the data plane OS, and then may determine, based on the first interrupt vector table, a component whose running is interrupted, and then a corresponding component performs a corresponding interrupt processing procedure based on an indication of the first interrupt vector table.

For example, if the component whose running is interrupted is the untrusted component, the untrusted component executes, based on the indication of the first interrupt vector table, an interrupt service program corresponding to the interrupt, for example, forwards a data packet.

For example, if the component whose running is interrupted is the trusted component and/or the intermediate component, after executing the secure storage program based on the indication of the first interrupt vector table, the intermediate component and the trusted component return to the untrusted component to execute the interrupt service program corresponding to the interrupt. The first request may include an interrupt processing request. As shown in FIG. 6, the secure storage program includes the interrupt processing request. The intermediate component receives the interrupt processing request sent by the untrusted component, executes the first system instruction to obtain the first virtual address, and sends the interrupt processing request to the trusted base based on the first virtual address. The trusted base stores the interrupt context based on the interrupt processing request. After the trusted base securely stores the interrupt context, the trusted base calls the intermediate component to feed back a corresponding processing result to the untrusted component. The intermediate component deletes the first virtual address stored in the general-purpose register, returns the processing result to the untrusted component, and enters the untrusted component to execute the interrupt service program corresponding to the interrupt. When the untrusted component requests to return from the interrupt after executing the interrupt service program, the untrusted component calls the intermediate component again. The intermediate component executes the first system instruction to obtain the first virtual address, and sends the interrupt return request to the trusted component to which the first virtual address points, to enter the trusted component, and the trusted base restores the interrupt context.

Therefore, according to the interrupt vector table configured by the trusted base and the interrupt processing protection mechanism, the trusted base can intercept an interrupt in time. When the component whose running is interrupted is the trusted component and/or the intermediate component, the interrupt context is securely stored in the trusted base, to avoid the context from being tampered with or leaked during the running of the trusted component and/or the intermediate component, so as to help protect integrity and privacy of data and/or code in the trusted component of the data plane OS.

So far, the logical architecture and the functional implementation of the data plane OS in this application are described with reference to FIG. 5 to FIG. 8. The logical architecture and the functional implementation thereof help achieve high performance and ensure security of the data plane OS. Even if the foregoing data processing solution is applied to the data plane OS architecture shown in FIG. 1 and FIG. 2, the data processing solution can be implemented only by simply modifying a link script file or an executable file, and current services do not need to be greatly changed, so that high performance of the data plane operating system shown in FIG. 1 is not affected, and existing services are not affected.

The following describes, with reference to a 5G base station scenario, a data plane OS and a procedure of a data processing method implemented by the data plane OS in this application.

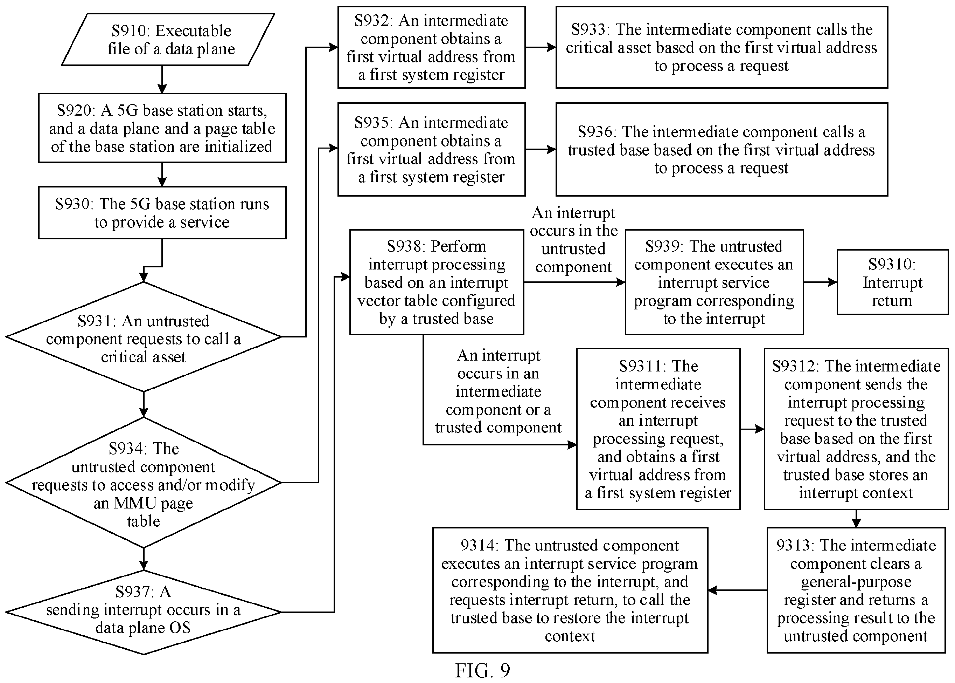

For example, FIG. 9 is a schematic flowchart of a data processing method according to an embodiment of this application. The method specifically includes the following steps.

S910: A compiler compiles program code of a data plane OS of a 5G base station into an executable file.

The executable file may be obtained through compilation before the 5G base station is delivered, and the executable file is pre-stored in the 5G base station. Alternatively, the executable file may be obtained after an existing related file of the 5G base station is modified and compiled, and stored in the 5G base station. The executable file includes a plurality of sections (section), including a code section, a data section, and the like, and is used to store content (including data and/or code) of each component of the data plane OS of the 5G base station. When compilation is performed before delivery or when modification and compilation are performed, a link script file may be compiled or modified and compiled, so that the compiler places, during compilation, content (including data and/or code) of a critical asset of the data plane OS of the 5G base station in an independent secure section (secure section) in the executable file. In this way, during initialization of the 5G base station, a loader can load each section of the executable file into memory of the 5G base station, and can further obtain the data and the code of the critical asset by searching the secure section, so that the loader loads the data and the code of the critical asset onto a first virtual address randomly selected from a virtual address space of the data plane OS, to help implement random "hiding" of the critical asset in the virtual address space.

In addition, the compiler may be further used to eliminate a system instruction in related code of the data plane OS, to ensure that code of an untrusted component does not include a first system instruction for accessing a special first system register of the 5G base station. A system instruction for directly or indirectly accessing a trusted component is replaced with a function call for an intermediate component, so that in a subsequent running process of the data plane OS, a first system instruction that is of the untrusted component and that is used to access a critical asset component and/or a trusted base, or a first system instruction that is of the untrusted component and that is used to obtain the first virtual address is non-executable. This ensures that the untrusted component cannot directly access the trusted component, helps implement the random "hiding" of the critical asset in the virtual address space, and protects integrity and privacy of data and code in the trusted component.

S920: The 5G base station starts, and the data plane OS and an MMU page table of the base station are initialized.

Specifically, when the 5G base station is initialized, the loader loads the executable file of the entire data plane OS of the 5G base station into the memory of the 5G base station. Then, the loader enters the trusted component, and the trusted base completes initialization of the MMU page table or another related initialization process. The loader uses a virtual address randomly selected from the virtual address space of the data plane OS as the first virtual address, loads content of the trusted component onto an address to which the first virtual address points, and stores the first virtual address in the first system register of the 5G base station, to help implement random "hiding" of an entry address of the trusted component in the virtual address space. The trusted base initializes the MMU page table, implements mapping between a virtual address in the virtual address space of the data plane OS and a physical address in the memory, and configures an access permission attribute of the MMU page table. The access permission attribute of the MMU page table satisfies that access permission of a code area to which the MMU page table is mapped is being non-writable, and access permission of a data area to which the MMU page table is mapped is being non-executable. In this way, the entire virtual address space of the data plane OS is mapped as a non-executable data area and a non-writable code area, to prevent an attacker from introducing an attack by rewriting the code area or executing the data area. Address information of the MMU page table is also stored in the address to which the first virtual address points, to implement random "hiding" of the MMU page table in the virtual address space, so as to ensure that an attacker cannot obtain the first virtual address by reading the MMU page table. In addition, the trusted base further initializes an interrupt vector table to which a second system register (for example, an interrupt vector base address register VBAR) of the 5G base station points, so that during subsequent system running, the trusted base can intercept an interrupt in time and securely store a context of an interrupted intermediate component and/or a context of an interrupted trusted component, to prevent related information in the trusted component and/or the intermediate component from being leaked or tampered with. After the loader completes loading, related code corresponding to the loader is eliminated from the memory, to prevent an attacker from maliciously using system instructions in the loader.

After the initialization of the 5G base station is completed, a logical architecture of the data plane OS of the 5G base station is shown in FIG. 5, including a trusted component, an intermediate component, and an untrusted component. The trusted component includes a trusted computing base and a critical asset component (including critical assets of a plurality of base station applications and a critical asset of a data plane OS kernel of the 5G base station), and the critical asset includes critical data and/or critical code used to provide a security service. The untrusted component includes the plurality of base station applications and the data plane OS kernel, and the intermediate component includes a plurality of system instructions used for security isolation between the trusted component and the untrusted component.

S930: The 5G base station runs to provide a service.

In a running process of the 5G base station, components in the data plane OS collaborate to process and forward data at a high speed. In a running process of the 5G base station, the data plane OS of the 5G base station implements security isolation protection on the trusted component based on the data processing method in the foregoing embodiment, to help ensure integrity and privacy of data and/or code in the trusted component.

For example, in S931, in a running process of the 5G base station, the untrusted component sends a first request to call the critical asset component. For example, the critical data and/or the critical code in critical asset component are/is called to provide a security service.

S932: The intermediate component receives the first request, executes the first system instruction to obtain the first virtual address from the first system register of the 5G base station, and stores the first virtual address in a general-purpose register (for example, X0) of the 5G base station.

S933: The intermediate component calls the critical asset based on the first virtual address, and transfers the first request to an address to which the first virtual address points, to enter the trusted component to access the critical asset, for example, complete processing, for example, user identity authentication, encryption, decryption, and plaintext processing, for the first request by using the critical data and/or the critical code in the critical asset. After processing the first request, the intermediate component deletes the first virtual address stored in the general-purpose register, and returns a processing result to the untrusted component. The untrusted component continues to complete high-speed data processing and forwarding based on the processing result, to ensure secure and efficient running of a service on a 5G base station side.

For example, in S934, in a running process of the 5G base station, the untrusted component sends the first request to request to access and/or modify the MMU page table.

S935: The intermediate component receives the request for accessing and/or modifying the MMU page table, executes the first system instruction to obtain the first virtual address from the first system register of the 5G base station, and stores the first virtual address in the general-purpose register (for example, X0) of the 5G base station.

S936: The intermediate component calls the trusted base based on the first virtual address, and transfers the request for accessing and/or modifying the MMU page table to the address to which the first virtual address points, to enter the trusted component to access the trusted base. The trusted base first verifies the request for accessing the MMU page table and/or the request for modifying the MMU page table. If the request meets a preset verification condition, the request is considered valid, and the processing of the request for accessing and/or modifying the MMU page table is completed. If the request does not meet the preset verification condition, the request is considered invalid and the request is not processed. In addition, a corresponding security processing program, for example, exception processing, is started to prevent the MMU page table or the base station memory from being maliciously accessed or tampered with.

For example, in S937, the untrusted component of the 5G base station, for example, reads the second system register and determines that the data plane OS is interrupted.

S938: Perform interrupt processing based on a processing program indicated by the interrupt vector table to which the second system register points.

If the component whose running is interrupted is the untrusted component, that is, the interrupt occurs in a running process of the untrusted component, in S939, the untrusted component executes, based on an indication of the interrupt vector table, an interrupt service program corresponding to the interrupt. For example, the data plane OS kernel executes the interrupt service program. In S9310, the untrusted component returns from the interrupt, to restore an interrupt context (that is, a context of the untrusted component whose interrupted running is resumed).

If the component whose running is interrupted is the trusted component and/or the intermediate component, that is, the interrupt occurs in a running process of the trusted component and/or the intermediate component, in S9311, the untrusted component sends, based on an indication of the first interrupt vector table, an interrupt processing request to request to call the trusted base to store the interrupt context. The intermediate component receives the interrupt processing request, executes the first system instruction to obtain the first virtual address from the first system register of the 5G base station, and stores the first virtual address in the general-purpose register (for example, X0) of the 5G base station. The intermediate component calls the trusted base based on the first virtual address, and transfers the interrupt processing request to the address to which the first virtual address points, to enter the trusted component to access the trusted base. In S9312, the trusted computing base stores the interrupt context based on the interrupt processing request. Then, in S9313, the intermediate component executes a third system instruction to delete the first virtual address stored in the general-purpose register, and sends a processing result to the untrusted component. The untrusted component executes the interrupt service program corresponding to the interrupt. In S9314, the untrusted component calls the intermediate component when requesting to return from the interrupt. The intermediate component executes the first system instruction to obtain the first virtual address and stores the first virtual address in the general-purpose register, and then executes a second system instruction to transfer an interrupt return request to the address to which the first virtual address points, to enter the trusted component. Then the trusted base restores the interrupt context, to resume running of the interrupted intermediate component and/or trusted component.

According to the foregoing method procedure, configuration logic and loading logic of the data plane OS of the 5G base station, and running logic of each component are configured, and a plurality of protection mechanisms such as an address space hiding and protection mechanism, an intermediate component protection mechanism, a level self-protection mechanism, and an interrupt processing protection mechanism are used. Protection at levels helps ensure integrity and privacy of data and/or code that need/needs privacy protection in the data plane OS. In addition, according to the foregoing solution, the existing data plane OS architecture shown in FIG. 2 does not need to be greatly changed, the existing service is not greatly affected, and high performance of the data plane OS can still be ensured.

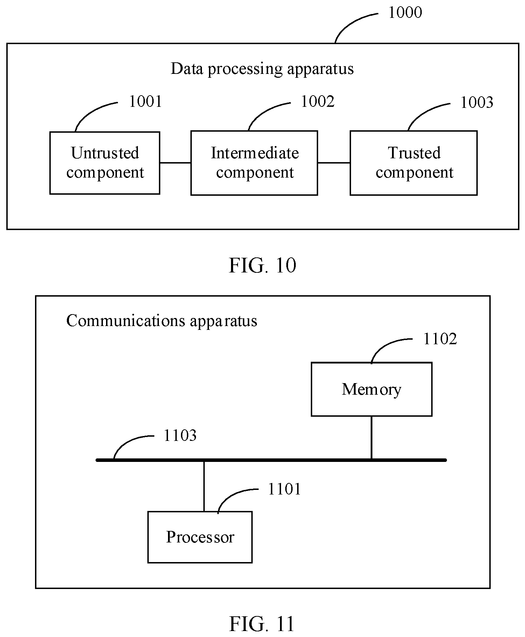

Based on a same technical concept, an embodiment of this application further provides a data processing apparatus. As shown in FIG. 10, a data processing apparatus 1000 includes an untrusted component 1001, an intermediate component 1002, and a trusted component 1003. The untrusted component 1001 includes an application and a data plane operating system OS kernel. The trusted component 1003 includes a trusted computing base and a critical asset component. The critical asset component includes critical data and/or critical code that are/is of the application and the data plane OS kernel and that are/is used to provide a security service. The intermediate component is used for security isolation between the trusted component and the untrusted component. The intermediate component includes a first system instruction. The first system instruction is used to obtain a first virtual address from a first system register of a network device. The first virtual address points to the trusted component. The untrusted component is configured to send a first request, and the first request is used to access the trusted component. The intermediate component is configured to receive the first request, execute the first system instruction to obtain the first virtual address, and send the first request to the trusted component based on the first virtual address. The trusted component is configured to perform processing based on the first request.

In an implementation, that the first system instruction is used to obtain a first virtual address from a first system register of a network device includes: The first system instruction is used to store, in a general-purpose register of the network device, the first virtual address read from the first system register. After the trusted component performs processing based on the first request, the intermediate component is configured to: receive a second request sent by the trusted component, where the second request is used to feed back a processing result of the trusted component to the untrusted component; and delete the first virtual address stored in the general-purpose register, and send the processing result to the untrusted component.

In an implementation, that the first request is used to access the trusted component includes: The first request is used to access the critical asset component. That the trusted component performs processing based on the first request includes: The trusted component processes the first request based on the critical data and/or the critical code in the critical asset component.

The first request includes a request for accessing and/or modifying a memory management unit MMU page table of a data plane OS. Before the trusted component performs processing based on the first request, the trusted computing base is configured to: determine that the request for accessing and/or modifying the MMU page table meets a preset verification condition. The verification condition includes: The request for accessing the MMU page table is not to access a first page table, where the first page table is used to map the trusted component; and the request for modifying the MMU page table is not to change an access permission attribute of the MMU page table. The access permission attribute of the MMU page table satisfies that access permission of a code area to which the MMU page table is mapped is being non-writable, and access permission of a data area to which the MMU page table is mapped is being non-executable.

In an implementation, a second system register of the network device points to an interrupt vector table configured by the trusted computing base. The interrupt vector table is used to indicate a processing program corresponding to an interrupt. The untrusted component is configured to: if the interrupt occurs in the data plane OS, determine, based on the interrupt vector table, a component whose running is interrupted; and if the component whose running is interrupted is the untrusted component, execute, based on an indication of the interrupt vector table, an interrupt service program corresponding to the interrupt; or if the component whose running is interrupted is the trusted component and/or the intermediate component, before the untrusted component executes an interrupt service program corresponding to the interrupt, send an interrupt processing request based on the indication of the interrupt vector table, where the first request includes the interrupt processing request. That the trusted component performs processing based on the first request includes: The trusted computing base stores an interrupt context based on the interrupt processing request.

In an implementation, the processing result of the trusted component includes a processing result of the trusted computing base for the interrupt context; and/or the first request further includes an interrupt return request.

In an implementation, the apparatus further includes a loader. The loader is configured to load an executable file of the data processing apparatus into memory of the network device during device initialization. During device start, the loader loads content of the trusted component onto the first virtual address by using a virtual address randomly selected from a virtual address space of the data processing apparatus as the first virtual address, and stores the first virtual address in the first system register. The trusted computing base is further configured to: initialize the MMU page table, map the virtual address in the virtual address space to the memory, and configure the access permission attribute of the MMU page table. The access permission attribute of the MMU page table satisfies that the access permission of the code area to which the MMU page table is mapped is being non-writable, and the access permission of the data area to which the MMU page table is mapped is being non-executable.

FIG. 11 is a schematic diagram of a communications apparatus according to an embodiment of this application. A structure of the communications apparatus is shown in FIG. 11, and the communications apparatus includes a processor 1101 and a memory 1102. The memory stores one or more computer programs, and the one or more computer programs include instructions. When the processor invokes the instructions, the communications apparatus is enabled to perform the foregoing embodiments and the data processing method provided in the foregoing embodiments. The following describes functions of each single component of the communications apparatus.

The processor 1101 and the memory 1102 are connected to each other by using a bus 1103. The bus 1103 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The memory 1102 stores one or more computer programs, and the one or more computer programs include instructions. The memory 1102 may include a random access memory (random access memory, RAM), or may further include a non-volatile memory (non-volatile memory), for example, at least one magnetic disk memory. The processor 1101 executes the program instructions in the memory 1102, and implements the foregoing functions by using data stored in the memory 1102, to implement the data processing method provided in the foregoing embodiments.

It may be understood that the memory 1102 in the FIG. 11 of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) that is used as an external cache. By way of example but not limitative description, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that, the memory of the systems and methods described in this specification includes but is not limited to these and any other memories of appropriate types.

It should be noted that in the foregoing embodiments of this application, division into the modules is an example and is merely logical function division, and there may be another division manner during actual implementation. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) or a processor (processor) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Based on the foregoing embodiments, an embodiment of this application further provides a computer-readable storage medium. The computer-readable storage medium stores a computer program. When the computer program is executed by a computer, the computer is enabled to perform the data processing method according to the foregoing embodiments.

The storage medium may be any available medium accessible to a computer. The following provides an example but does not impose a limitation: The computer-readable medium may include a RAM, a ROM, an EEPROM, a CD-ROM or another compact disc storage, a magnetic disk storage medium or another magnetic storage device, or any other medium that can be used to carry or store expected program code in a form of instructions or a data structure and can be accessed by the computer.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on the computer, all or some of the procedures or functions according to embodiments of the present invention are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-state Disk, SSD)), or the like.

The various illustrative logical units and circuits in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk drive, a removable magnetic disk, a CD-ROM, or a storage medium of any other form in the art. For example, the storage medium may connect to a processor so that the processor may read information from the storage medium and write information to the storage medium. Alternatively, the storage medium may be integrated into a processor. The processor and the storage medium may be disposed in an ASIC, and the ASIC may be disposed in a terminal device. Optionally, the processor and the storage medium may alternatively be disposed in different components of the terminal device.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Although the present invention is described with reference to specific features and embodiments thereof, it is clearly that various modifications and combinations may be made to the specific features and embodiments without departing from the scope of the present invention. Correspondingly, the specification and accompanying drawings are merely example descriptions of the present invention defined by the appended claims. is clearly that, a person skilled in the art can make various modifications and variations to the present invention without departing from the scope of the present invention. In this way, the present invention is intended to cover these modifications and variations provided that they fall within the scope of the claims of the present invention.

## Claims

1. A data processing method, applied to an operating system, OS, of a network device, wherein the OS comprises an untrusted component (501), an intermediate component (502), and a trusted component (503), the untrusted component (501) comprises an application and an OS kernel, the trusted component (503) comprises a trusted computing base and a critical asset component, the critical asset component comprises critical data and/or critical code that are/is of the application and the OS kernel and that are/is used to provide a security service, the intermediate component (502) is used for security isolation between the trusted component (503) and the untrusted component (501), the intermediate component (503) comprises a first system instruction, the first system instruction is used to obtain a first address, the first address points to the trusted component, and the method comprises:
receiving, by the intermediate component (502), a first request sent by the untrusted component (501), wherein the first request is used to access the trusted component (503);
executing, by the intermediate component (502), the first system instruction to obtain the first address, and sending the first request to the trusted component (503) based on the first address; and
performing, by the trusted component (503), processing based on the first request;
the method **characterised in that**:
the first address is a first virtual address and the first system instruction is used to obtain the first virtual address from a first system register of the network device;
the OS is a data plane OS and the kernel is a data plane OS kernel;
the first request comprises a request for accessing and/or modifying a memory management unit, MMU, page table of the data plane OS, and before the performing, by the trusted component (503), processing based on the first request, the method further comprises:
determining, by the trusted computing base, that the request for accessing and/or modifying the MMU page table meets a preset verification condition, wherein the verification condition comprises:
the request for accessing the MMU page table is not to access a first page table, wherein the first page table is used to map the trusted component (503); and
the request for modifying the MMU page table is not to change an access permission attribute of the MMU page table, wherein the access permission attribute of the MMU page table satisfies that access permission of a code area to which the MMU page table is mapped is being non-writable, and access permission of a data area to which the MMU page table is mapped is being non-executable.

2. The method according to claim 1, wherein that the first system instruction is used to obtain a first virtual address from a first system register of the network device comprises:
the first system instruction is used to store, in a general-purpose register of the network device, the first virtual address read from the first system register; and
after the performing, by the trusted component (503), processing based on the first request, the method further comprises:
receiving, by the intermediate component (502), a second request sent by the trusted component (503), wherein the second request is used to feed back a processing result of the trusted component (503) to the untrusted component (501); and
deleting, by the intermediate component (502), the first virtual address stored in the general-purpose register, and sending the processing result to the untrusted component (501).

3. The method according to claim 1 or 2, wherein that the first request is used to access the trusted component (503) comprises: the first request is used to access the critical asset component; and
the performing, by the trusted component (503), processing based on the first request comprises:
processing the first request based on the critical data and/or the critical code in the critical asset component.

4. The method according to any one of claims 1 to 3, wherein a second system register of the network device points to an interrupt vector table configured by the trusted computing base, the interrupt vector table is used to indicate a processing program corresponding to an interrupt, and the method further comprises:
if the interrupt occurs in the data plane OS, determining, by the untrusted component (501) based on the interrupt vector table, a component whose running is interrupted; and
if the component whose running is interrupted is the untrusted component (501), executing, by the untrusted component (501) based on an indication of the interrupt vector table, an interrupt service program corresponding to the interrupt; or
if the component whose running is interrupted is the trusted component (503) and/or the intermediate component (502), before the untrusted component (501) executes an interrupt service program corresponding to the interrupt, sending, by the untrusted component (501), an interrupt processing request based on an indication of the interrupt vector table, wherein the first request comprises the interrupt processing request, and the performing, by the trusted component (503), processing based on the first request comprises: storing, by the trusted computing base, an interrupt context based on the interrupt processing request.

5. The method according to claim 4, wherein
the processing result of the trusted component (503) comprises a processing result of the trusted computing base for the interrupt context; and/or
the first request further comprises an interrupt return request.

6. The method according to any one of claims 1 to 5, wherein the data plane OS further comprises a loader, the loader is further configured to load an executable file of the data plane OS into memory of the network device during device initialization, and the method further comprises:
during device start, loading, by the loader, content of the trusted component (503) onto the first virtual address by using a virtual address randomly selected from a virtual address space of the data plane OS as the first virtual address, and storing the first virtual address in the first system register; and
initializing, by the trusted computing base, the MMU page table, mapping the virtual address in the virtual address space to the memory, and configuring the access permission attribute of the MMU page table, wherein the access permission attribute of the MMU page table satisfies that the access permission of the code area to which the MMU page table is mapped is being non-writable, and the access permission of the data area to which the MMU page table is mapped is being non-executable.

7. A data processing apparatus (1000), comprising an untrusted component (1001), an intermediate component (1002), and a trusted component (1003), wherein the untrusted component (1001) comprises an application and a operating system, OS, kernel, the trusted component (1003) comprises a trusted computing base and a critical asset component, the critical asset component comprises critical data and/or critical code that are/is of the application and the OS kernel and that are/is used to provide a security service, the intermediate component (1002) is used for security isolation between the trusted component (1003) and the untrusted component (1001), the intermediate component (1002) comprises a first system instruction, the first system instruction is used to obtain a first address, and the first address points to the trusted component (1003);
the untrusted component (1001) is configured to send a first request, and the first request is used to access the trusted component (1003);
the intermediate component (1002) is configured to: receive the first request, execute the first system instruction to obtain the first address, and send the first request to the trusted component (1003) based on the first address; and
the trusted component (1003) is configured to perform processing based on the first request;
the apparatus **characterised in that**:
the OS kernel is a data plane OS kernel;
the first address is a first virtual address and the first system instruction is used to obtain the first virtual from a first system register of a network device; and
the first request comprises a request for accessing and/or modifying a memory management unit MMU page table of a data plane OS, and the trusted computing base is configured to determine, before the trusted component (1003) performs processing based on the first request, that the request for accessing and/or modifying the MMU page table meets a preset verification condition, wherein the verification condition comprises:
the request for accessing the MMU page table is not to access a first page table, wherein the first page table is used to map the trusted component (1003); and
the request for modifying the MMU page table is not to change an access permission attribute of the MMU page table, wherein the access permission attribute of the MMU page table satisfies that access permission of a code area to which the MMU page table is mapped is being non-writable, and access permission of a data area to which the MMU page table is mapped is being non-executable.

8. The apparatus (1000) according to claim 7, wherein that the first system instruction is used to obtain a first virtual address from a first system register of a network device comprises:
the first system instruction is used to store, in a general-purpose register of the network device, the first virtual address read from the first system register; and
after the trusted component (1003) performs processing based on the first request, the intermediate component (1002) is configured to:
receive a second request sent by the trusted component (1003), wherein the second request is used to feed back a processing result of the trusted component (1003) to the untrusted component (1001); and
delete the first virtual address stored in the general-purpose register, and send the processing result to the untrusted component (1001).

9. The apparatus according to claim 7 or 8, wherein that the first request is used to access the trusted component (1003) comprises: the first request is used to access the critical asset component; and
that the trusted component (1003) performs processing based on the first request comprises:
processing the first request based on the critical data and/or the critical code in the critical asset component.

10. The apparatus according to any one of claims 7 to 9, wherein a second system register of the network device points to an interrupt vector table configured by the trusted computing base, the interrupt vector table is used to indicate a processing program corresponding to an interrupt, and the untrusted component (1001) is configured to:
if the interrupt occurs in the data plane OS, determine, based on the interrupt vector table, a component whose running is interrupted; and
if the component whose running is interrupted is the untrusted component (1001), execute, based on an indication of the interrupt vector table, an interrupt service program corresponding to the interrupt; or
if the component whose running is interrupted is the trusted component (1003) and/or the intermediate component (1002), before executing an interrupt service program corresponding to the interrupt, send an interrupt processing request based on an indication of the interrupt vector table, wherein the first request comprises the interrupt processing request, and that the trusted component (1003) performs processing based on the first request comprises: the trusted computing base stores an interrupt context based on the interrupt processing request.

11. The apparatus according to claim 10, wherein
the processing result of the trusted component (1003) comprises a processing result of the trusted computing base for the interrupt context; and/or
the first request further comprises an interrupt return request.

12. The apparatus according to any one of claims 7 to 11, wherein the apparatus further comprises a loader, and the loader is configured to:
load an executable file of the data processing apparatus into memory of the network device during device initialization;
during device start, the loader loads content of the trusted component (1003) onto the first virtual address by using a virtual address randomly selected from a virtual address space of the data processing apparatus as the first virtual address, and stores the first virtual address in the first system register; and
the trusted computing base is further configured to:
initialize the MMU page table, map the virtual address in the virtual address space to the memory, and configure the access permission attribute of the MMU page table, wherein the access permission attribute of the MMU page table satisfies that the access permission of the code area to which the MMU page table is mapped is being non-writable, and the access permission of the data area to which the MMU page table is mapped is being non-executable.

13. A computer-readable storage medium, wherein the computer-readable storage medium stores a computer program, and when the computer program is run on a computer, the computer is enabled to perform the method according to any one of claims 1 to 6.

## Patentansprüche

1. Datenverarbeitungsverfahren, das auf ein Betriebssystem, OS, einer Netzwerkeinrichtung angewendet wird, wobei das OS eine nicht vertrauenswürdige Komponente (501), eine Zwischenkomponente (502) und eine vertrauenswürdige Komponente (503) umfasst, die nicht vertrauenswürdige Komponente (501) eine Anwendung und einen OS-Kern umfasst, die vertrauenswürdige Komponente (503) eine vertrauenswürdige Rechenbasis und eine kritische Ressourcenkomponente umfasst, die kritische Ressourcenkomponente kritische Daten und/oder kritischen Code umfasst, die/der zu der Anwendung und zu dem OS-Kern gehören/gehört und die/der verwendet werden/wird, um einen Sicherheitsdienst bereitzustellen, die Zwischenkomponente (502) für eine Sicherheitsisolierung zwischen der vertrauenswürdigen Komponente (503) und der nicht vertrauenswürdigen Komponente (501) verwendet wird, die Zwischenkomponente (503) eine erste Systemanweisung umfasst, die erste Systemanweisung verwendet wird, um eine erste Adresse zu erlangen, die erste Adresse auf die vertrauenswürdige Komponente zeigt und das Verfahren Folgendes umfasst:
Empfangen, durch die Zwischenkomponente (502), einer ersten Anforderung, die durch die nicht vertrauenswürdige Komponente (501) gesendet wird, wobei die erste Anforderung verwendet wird, um auf die vertrauenswürdige Komponente (503) zuzugreifen;
Ausführen, durch die Zwischenkomponente (502), der ersten Systemanweisung, um die erste Adresse zu erlangen, und Senden der ersten Anforderung an die vertrauenswürdige Komponente (503) basierend auf der ersten Adresse; und
Durchführen, durch die vertrauenswürdige Komponente (503), einer Verarbeitung basierend auf der ersten Anforderung;
wobei das Verfahren **dadurch gekennzeichnet ist, dass**:
die erste Adresse eine erste virtuelle Adresse ist und die erste Systemanweisung verwendet wird, um die erste virtuelle Adresse aus einem ersten Systemregister der Netzwerkeinrichtung zu erlangen;
das OS ein Datenebenen-OS ist und der Kern ein Datenebenen-OS-Kern ist;
die erste Anforderung eine Anforderung zum Zugreifen auf und/oder Ändern einer Speicherverwaltungseinheits-Seitentabelle, MMU-Seitentabelle, des Datenebenen-OS umfasst und das Verfahren vor dem Durchführen, durch die vertrauenswürdige Komponente (503), einer Verarbeitung basierend auf der ersten Anforderung ferner Folgendes umfasst:
Feststellen, durch die vertrauenswürdige Rechenbasis, dass die Anforderung zum Zugreifen auf und/oder Ändern der MMU-Seitentabelle eine voreingestellte Überprüfungsbedingung erfüllt, wobei die Überprüfungsbedingung Folgendes umfasst:
die Anforderung zum Zugreifen auf die MMU-Seitentabelle dient nicht dazu, auf eine erste Seitentabelle zuzugreifen, wobei die erste Seitentabelle verwendet wird, um die vertrauenswürdige Komponente (503) zuzuordnen; und
die Anforderung zum Ändern der MMU-Seitentabelle dient nicht dazu, ein Zugriffsberechtigungsattribut der MMU-Seitentabelle zu ändern, wobei das Zugriffsberechtigungsattribut der MMU-Seitentabelle erfüllt, dass eine Zugriffsberechtigung eines Codebereichs, dem die MMU-Seitentabelle zugeordnet ist, nicht beschreibbar ist und eine Zugriffsberechtigung eines Datenbereichs, dem die MMU-Seitentabelle zugeordnet ist, nicht ausführbar ist.

2. Verfahren nach Anspruch 1, wobei, dass die erste Systemanweisung verwendet wird, um eine erste virtuelle Adresse aus einem ersten Systemregister der Netzwerkeinrichtung zu erlangen, Folgendes umfasst:
die erste Systemanweisung wird verwendet, um in einem Mehrzweckregister der Netzwerkeinrichtung die erste virtuelle Adresse zu speichern, die aus dem ersten Systemregister gelesen wird; und
das Verfahren nach dem Durchführen, durch die vertrauenswürdige Komponente (503), einer Verarbeitung basierend auf der ersten Anforderung ferner Folgendes umfasst:
Empfangen, durch die Zwischenkomponente (502), einer zweiten Anforderung, die durch die vertrauenswürdige Komponente (503) gesendet wird, wobei die zweite Anforderung verwendet wird, um ein Verarbeitungsergebnis der vertrauenswürdigen Komponente (503) an die nicht vertrauenswürdige Komponente (501) zurückzumelden; und
Löschen, durch die Zwischenkomponente (502), der ersten virtuellen Adresse, die in dem Mehrzweckregister gespeichert ist, und Senden des Verarbeitungsergebnisses an die nicht vertrauenswürdige Komponente (501).

3. Verfahren nach Anspruch 1 oder 2, wobei, dass die erste Anforderung verwendet wird, um auf die vertrauenswürdige Komponente (503) zuzugreifen, Folgendes umfasst: die erste Anforderung wird verwendet, um auf die kritische Ressourcenkomponente zuzugreifen; und
das Durchführen, durch die vertrauenswürdige Komponente (503), einer Verarbeitung basierend auf der ersten Anforderung, Folgendes umfasst:
Verarbeiten der ersten Anforderung basierend auf den kritischen Daten und/oder dem kritischen Code in der kritischen Ressourcenkomponente.

4. Verfahren nach einem der Ansprüche 1 bis 3, wobei ein zweites Systemregister der Netzwerkeinrichtung auf eine Unterbrechungsvektortabelle zeigt, die durch die vertrauenswürdige Rechenbasis konfiguriert ist, die Unterbrechungsvektortabelle verwendet wird, um ein Verarbeitungsprogramm anzugeben, das einer Unterbrechung entspricht, und das Verfahren ferner Folgendes umfasst:
wenn die Unterbrechung in dem Datenebenen-OS auftritt, Feststellen, durch die nicht vertrauenswürdige Komponente (501) basierend auf der Unterbrechungsvektortabelle, einer Komponente, deren Ausführung unterbrochen ist; und,
wenn die Komponente, deren Ausführung unterbrochen ist, die nicht vertrauenswürdige Komponente (501) ist, Ausführen, durch die nicht vertrauenswürdige Komponente (501) basierend auf einer Angabe der Unterbrechungsvektortabelle, eines Unterbrechungsdienstprogramms, das der Unterbrechung entspricht; oder,
wenn die Komponente, deren Ausführung unterbrochen ist, die vertrauenswürdige Komponente (503) und/oder die Zwischenkomponente (502) ist, bevor die nicht vertrauenswürdige Komponente (501) ein Unterbrechungsdienstprogramm ausführt, das der Unterbrechung entspricht, Senden, durch die nicht vertrauenswürdige Komponente (501), einer Unterbrechungsverarbeitungsanforderung basierend auf einer Angabe der Unterbrechungsvektortabelle, wobei die erste Anforderung die Unterbrechungsverarbeitungsanforderung umfasst und das Durchführen, durch die vertrauenswürdige Komponente (503), einer Verarbeitung basierend auf der ersten Anforderung Folgendes umfasst: Speichern, durch die vertrauenswürdige Rechenbasis, eines Unterbrechungskontextes basierend auf der Unterbrechungsverarbeitungsanforderung.

5. Verfahren nach Anspruch 4, wobei
das Verarbeitungsergebnis der vertrauenswürdigen Komponente (503) ein Verarbeitungsergebnis der vertrauenswürdigen Rechenbasis für den Unterbrechungskontext umfasst; und/oder
die erste Anforderung ferner eine Unterbrechungsrückgabeanforderung umfasst.

6. Verfahren nach einem der Ansprüche 1 bis 5, wobei das Datenebenen-OS ferner einen Lader umfasst, der Lader ferner dazu konfiguriert ist, eine ausführbare Datei des Datenebenen-OS in einen Speicher der Netzwerkeinrichtung während der Einrichtungsinitialisierung zu laden, und das Verfahren ferner Folgendes umfasst:
während eines Einrichtungsstarts Laden, durch den Lader, von Inhalt der vertrauenswürdigen Komponente (503) auf die erste virtuelle Adresse unter Verwendung einer virtuellen Adresse, die zufällig aus einem virtuellen Adressraum des Datenebenen-OS als die erste virtuelle Adresse ausgewählt ist, und Speichern der ersten virtuellen Adresse in dem ersten Systemregister, und
Initialisieren, durch die vertrauenswürdige Rechenbasis, der MMU-Seitentabelle, Zuordnen der virtuellen Adresse in dem virtuellen Adressraum zu dem Speicher und Konfigurieren des Zugriffsberechtigungsattributs der MMU-Seitentabelle, wobei das Zugriffsberechtigungsattribut der MMU-Seitentabelle erfüllt, dass die Zugriffsberechtigung des Codebereichs, dem die MMU-Seitentabelle zugeordnet ist, nicht beschreibbar ist und die Zugriffsberechtigung des Datenbereichs, dem die MMU-Seitentabelle zugeordnet ist, nicht ausführbar ist.

7. Datenverarbeitungsvorrichtung (1000), umfassend eine nicht vertrauenswürdige Komponente (1001), eine Zwischenkomponente (1002) und eine vertrauenswürdige Komponente (1003), wobei die nicht vertrauenswürdige Komponente (1001) eine Anwendung und einen Betriebssystem-, OS-, Kern umfasst, die vertrauenswürdige Komponente (1003) eine vertrauenswürdige Rechenbasis und eine kritische Ressourcenkomponente umfasst, die kritische Ressourcenkomponente kritische Daten und/oder kritischen Code umfasst, die/der zu der Anwendung und zu dem OS-Kern gehören/gehört und die/der verwendet werden/wird, um einen Sicherheitsdienst bereitzustellen, die Zwischenkomponente (1002) für eine Sicherheitsisolierung zwischen der vertrauenswürdigen Komponente (1003) und der nicht vertrauenswürdigen Komponente (1001) verwendet wird, die Zwischenkomponente (1002) eine erste Systemanweisung umfasst, die erste Systemanweisung verwendet wird, um eine erste Adresse zu erlangen, und die erste Adresse auf die vertrauenswürdige Komponente (1003) zeigt;
die nicht vertrauenswürdige Komponente (1001) dazu konfiguriert ist, eine erste Anforderung zu senden, und die erste Anforderung verwendet wird, um auf die vertrauenswürdige Komponente (1003) zuzugreifen;
die Zwischenkomponente (1002) zu Folgendem konfiguriert ist:
Empfangen der ersten Anforderung, Ausführen der ersten Systemanweisung, um die erste Adresse zu erlangen, und Senden der ersten Anforderung an die vertrauenswürdige Komponente (1003) basierend auf der ersten Adresse; und
die vertrauenswürdige Komponente (1003) dazu konfiguriert ist, eine Verarbeitung basierend auf der ersten Anforderung durchzuführen;
wobei die Vorrichtung **dadurch gekennzeichnet ist, dass**:
der OS-Kern ein Datenebenen-OS-Kern ist;
die erste Adresse eine erste virtuelle Adresse ist und die erste Systemanweisung verwendet wird, um die erste virtuelle Adresse aus einem ersten Systemregister einer Netzwerkeinrichtung zu erlangen; und
die erste Anforderung eine Anforderung zum Zugreifen auf und/oder Ändern einer Speicherverwaltungseinheits-Seitentabelle, MMU-Seitentabelle, eines Datenebenen-OS umfasst und die vertrauenswürdige Rechenbasis dazu konfiguriert ist, bevor die vertrauenswürdige Komponente (1003) eine Verarbeitung basierend auf der ersten Anforderung durchführt, festzustellen, dass die Anforderung zum Zugreifen auf und/oder Ändern der MMU-Seitentabelle eine voreingestellte Überprüfungsbedingung erfüllt, wobei die Überprüfungsbedingung Folgendes umfasst:
die Anforderung zum Zugreifen auf die MMU-Seitentabelle dient nicht dazu, auf eine erste Seitentabelle zuzugreifen, wobei die erste Seitentabelle verwendet wird, um die vertrauenswürdigen Komponente (1003) zuzuordnen; und
die Anforderung zum Ändern der MMU-Seitentabelle dient nicht dazu, ein Zugriffsberechtigungsattribut der MMU-Seitentabelle zu ändern, wobei das Zugriffsberechtigungsattribut der MMU-Seitentabelle erfüllt, dass eine Zugriffsberechtigung eines Codebereichs, dem die MMU-Seitentabelle zugeordnet ist, nicht beschreibbar ist und eine Zugriffsberechtigung eines Datenbereichs, dem die MMU-Seitentabelle zugeordnet ist, nicht ausführbar ist.

8. Vorrichtung (1000) nach Anspruch 7, wobei, dass die erste Systemanweisung verwendet wird, um eine erste virtuelle Adresse aus einem ersten Systemregister einer Netzwerkeinrichtung zu erlangen, Folgendes umfasst:
die erste Systemanweisung wird verwendet, um in einem Mehrzweckregister der Netzwerkeinrichtung die erste virtuelle Adresse zu speichern, die aus dem ersten Systemregister gelesen wird, und
die Zwischenkomponente (1002) ist, nachdem die vertrauenswürdige Komponente (1003) eine Verarbeitung basierend auf der ersten Anforderung durchgeführt hat, zu Folgendem konfiguriert:
Empfangen einer zweiten Anforderung, die durch die vertrauenswürdige Komponente (1003) gesendet wird, wobei die zweite Anforderung verwendet wird, um ein Verarbeitungsergebnis der vertrauenswürdigen Komponente (1003) an die nicht vertrauenswürdige Komponente (1001) zurückzumelden; und
Löschen der ersten virtuellen Adresse, die in dem Mehrzweckregister gespeichert ist, und Senden des Verarbeitungsergebnisses an die nicht vertrauenswürdige Komponente (1001).

9. Vorrichtung nach Anspruch 7 oder 8, wobei, dass die erste Anforderung verwendet wird, um auf die vertrauenswürdige Komponente (1003) zuzugreifen, Folgendes umfasst: die erste Anforderung wird verwendet, um auf die kritische Ressourcenkomponente zuzugreifen; und
dass die vertrauenswürdige Komponente (1003) eine Verarbeitung basierend auf der ersten Anforderung durchführt, Folgendes umfasst:
Verarbeiten der ersten Anforderung basierend auf den kritischen Daten und/oder dem kritischen Code in der kritischen Ressourcenkomponente.

10. Vorrichtung nach einem der Ansprüche 7 bis 9, wobei ein zweites Systemregister der Netzwerkeinrichtung auf eine Unterbrechungsvektortabelle zeigt, die durch die vertrauenswürdige Rechenbasis konfiguriert ist, die Unterbrechungsvektortabelle verwendet wird, um ein Verarbeitungsprogramm anzugeben, das einer Unterbrechung entspricht, und die nicht vertrauenswürdige Komponente (1001) zu Folgendem konfiguriert ist:
wenn die Unterbrechung in dem Datenebenen-OS auftritt, Feststellen, basierend auf der Unterbrechungsvektortabelle, einer Komponente, deren Ausführung unterbrochen ist; und,
wenn die Komponente, deren Ausführung unterbrochen ist, die nicht vertrauenswürdige Komponente (1001) ist, Ausführen, basierend auf einer Angabe der Unterbrechungsvektortabelle, eines Unterbrechungsdienstprogramms, das der Unterbrechung entspricht; oder,
wenn die Komponente, deren Ausführung unterbrochen ist, die vertrauenswürdige Komponente (1003) und/oder die Zwischenkomponente (1002) ist, vor einem Ausführen eines Unterbrechungsdienstprogramms, das der Unterbrechung entspricht, Senden, einer Unterbrechungsverarbeitungsanforderung basierend auf einer Angabe der Unterbrechungsvektortabelle, wobei die erste Anforderung die Unterbrechungsverarbeitungsanforderung umfasst und dass die vertrauenswürdige Komponente (1003) eine Verarbeitung basierend auf der ersten Anforderung durchführt, Folgendes umfasst: die vertrauenswürdige Rechenbasis speichert einen Unterbrechungskontext basierend auf der Unterbrechungsverarbeitungsanforderung.

11. Vorrichtung nach Anspruch 10, wobei
das Verarbeitungsergebnis der vertrauenswürdigen Komponente (1003) ein Verarbeitungsergebnis der vertrauenswürdigen Rechenbasis für den Unterbrechungskontext umfasst; und/oder die erste Anforderung ferner eine Unterbrechungsrückgabeanforderung umfasst.

12. Vorrichtung nach einem der Ansprüche 7 bis 11, wobei die Vorrichtung ferner einen Lader umfasst und der Lader zu Folgendem konfiguriert ist:
Laden einer ausführbaren Datei der Datenverarbeitungsvorrichtung in den Speicher der Netzwerkeinrichtung während einer Einrichtungsinitialisierung;
während eines Einrichtungsstarts lädt der Lader Inhalt der vertrauenswürdigen Komponente (1003) auf die erste virtuelle Adresse unter Verwendung einer virtuellen Adresse, die zufällig aus einem virtuellen Adressraum der Datenverarbeitungsvorrichtung als die erste virtuelle Adresse ausgewählt ist, und speichert die erste virtuelle Adresse in dem ersten Systemregister und
die vertrauenswürdige Rechenbasis ferner zu Folgendem konfiguriert ist:
Initialisieren der MMU-Seitentabelle, Zuordnen der virtuellen Adresse in dem virtuellen Adressraum zu dem Speicher und Konfigurieren des Zugriffsberechtigungsattributs der MMU-Seitentabelle, wobei das Zugriffsberechtigungsattribut der MMU-Seitentabelle erfüllt, dass die Zugriffsberechtigung des Codebereichs, dem die MMU-Seitentabelle zugeordnet ist, nicht beschreibbar ist und die Zugriffsberechtigung des Datenbereichs, dem die MMU-Seitentabelle zugeordnet ist, nicht ausführbar ist.

13. Computerlesbares Speichermedium, wobei das computerlesbare Speichermedium ein Computerprogramm speichert und, wenn das Computerprogramm auf einem Computer ausgeführt wird, der Computer in die Lage versetzt wird, das Verfahren nach einem der Ansprüche 1 bis 6 durchzuführen.

## Revendications

1. Procédé de traitement de données, appliqué au système d'exploitation, OS, d'un dispositif de réseau, dans lequel l'OS comprend un composant non fiable (501), un composant intermédiaire (502), et un composant fiable (503), le composant non fiable (501) comprend une application et un noyau d'OS, le composant fiable (503) comprend une base informatique fiable et un composant d'actif critique, le composant d'actif critique comprend des données critiques et/ou un code critique appartenant à l'application et au noyau d'OS et qui est/sont utilisé(es) pour fournir un service de sécurité, le composant intermédiaire (502) assure l'isolation de sécurité entre le composant fiable (503) et le composant non fiable (501), le composant intermédiaire (503) comprend une première instruction système, la première instruction système est utilisée pour obtenir une première adresse, la première adresse pointe vers le composant fiable, et le procédé comprend :
la réception, par le composant intermédiaire (502), d'une première demande envoyée par le composant non fiable (501), dans lequel la première demande est utilisée pour accéder au composant fiable (503) ;
l'exécution, par le composant intermédiaire (502), de la première instruction système pour obtenir la première adresse, et l'envoi de la première demande au composant fiable (503) sur la base de la première adresse ; et
la réalisation, par le composant fiable (503), d'un traitement sur la base de la première demande ;
le procédé étant **caractérisé en ce que** :
la première adresse est une première adresse virtuelle et la première instruction système est utilisée pour obtenir la première adresse virtuelle à partir d'un premier registre système du dispositif de réseau ;
l'OS est un OS de plan de données et le noyau est un noyau d'OS de plan de données ;
la première demande comprend une demande d'accès et/ou de modification d'une table de pages d'unité de gestion de mémoire, MMU, de l'OS de plan de données, et avant la réalisation, par le composant fiable (503), d'un traitement sur la base de la première demande, le procédé comprend également :
la détermination, par la base informatique fiable, que la demande d'accès et/ou de modification de la table de pages MMU répond à une condition de vérification prédéfinie, dans lequel la condition de vérification comprend :
la demande d'accès à la table de pages MMU ne vise pas à accéder à une première table de pages, dans lequel la première table de pages est utilisée pour mapper le composant fiable (503) ; et
la demande de modification de la table de pages MMU ne vise pas à modifier un attribut d'autorisation d'accès de la table de pages MMU, dans lequel l'attribut d'autorisation d'accès de la table de pages MMU satisfait au fait que l'autorisation d'accès d'une zone de code à laquelle la table de pages MMU est mappée est non inscriptible, et que l'autorisation d'accès d'une zone de données à laquelle la table de pages MMU est mappée est non exécutable.

2. Procédé selon la revendication 1, dans lequel la première instruction système est utilisée pour obtenir une première adresse virtuelle à partir d'un premier registre système du dispositif de réseau, et comprend :
la première instruction système est utilisée pour stocker, dans un registre à usage général du dispositif de réseau, la première adresse virtuelle lue dans le premier registre système ; et
après la réalisation, par le composant fiable (503), du traitement sur la base de la première demande, le procédé comprend également :
la réception, par le composant intermédiaire (502), d'une seconde demande envoyée par le composant fiable (503), dans lequel la seconde demande est utilisée pour renvoyer un résultat de traitement du composant fiable (503) au composant non fiable (501) ; et
la suppression, par le composant intermédiaire (502), de la première adresse virtuelle stockée dans le registre à usage général, et l'envoi du résultat de traitement au composant non fiable (501).

3. Procédé selon la revendication 1 ou 2, dans lequel le fait que la première demande est utilisée pour accéder au composant fiable (503) comprend : la première demande est utilisée pour accéder au composant d'actif critique ; et
la réalisation, par le composant fiable (503), du traitement sur la base de la première demande comprend :
le traitement de la première demande sur la base des données critiques et/ou du code critique dans le composant d'actif critique.

4. Procédé selon l'une quelconque des revendications 1 à 3, dans lequel un second registre système du dispositif de réseau pointe vers une table de vecteurs d'interruption configurée par la base informatique fiable, la table de vecteurs d'interruption est utilisée pour indiquer un programme de traitement correspondant à une interruption, et le procédé comprend également :
si l'interruption se produit dans l'OS de plan de données, la détermination, par le composant non fiable (501) sur la base de la table de vecteurs d'interruption, d'un composant dont l'exécution est interrompue ; et
si le composant dont l'exécution est interrompue est le composant non fiable (501), l'exécution, par le composant non fiable (501) sur la base d'une indication de la table de vecteurs d'interruption, d'un programme de service d'interruption correspondant à l'interruption ; ou
si le composant dont l'exécution est interrompue est le composant fiable (503) et/ou le composant intermédiaire (502), avant que le composant non fiable (501) exécute un programme de service d'interruption correspondant à l'interruption, l'envoi, par le composant non fiable (501), d'une demande de traitement d'interruption sur la base d'une indication de la table de vecteurs d'interruption, dans lequel la première demande comprend la demande de traitement d'interruption, et la réalisation, par le composant fiable (503), d'un traitement sur la base de la première demande comprend : le stockage, par la base informatique fiable, d'un contexte d'interruption sur la base de la demande de traitement d'interruption.

5. Procédé selon la revendication 4, dans lequel
le résultat de traitement du composant fiable (503) comprend un résultat de traitement de la base informatique fiable pour le contexte d'interruption ; et/ou
la première demande comprend également une demande de retour d'interruption.

6. Procédé selon l'une quelconque des revendications 1 à 5, dans lequel l'OS de plan de données comprend également un chargeur, le chargeur est également configuré pour charger un fichier exécutable de l'OS de plan de données dans une mémoire du dispositif de réseau lors de l'initialisation du dispositif, et le procédé comprend également :
lors du démarrage du dispositif, le chargement, par le chargeur, d'un contenu du composant fiable (503) sur la première adresse virtuelle en utilisant une adresse virtuelle sélectionnée aléatoirement dans un espace d'adressage virtuel de l'OS de plan de données comme première adresse virtuelle, et le stockage de la première adresse virtuelle dans le premier registre système, et
l'initialisation, par la base informatique fiable, de la table de pages MMU, le mappage de l'adresse virtuelle dans l'espace d'adressage virtuel à la mémoire, et la configuration de l'attribut d'autorisation d'accès de la table de pages MMU, dans lequel l'attribut d'autorisation d'accès de la table de pages MMU satisfait au fait que l'autorisation d'accès de la zone de code à laquelle la table de pages MMU est mappée est non inscriptible, et que l'autorisation d'accès de la zone de données à laquelle la table de pages MMU est mappée est non exécutable.

7. Appareil de traitement de données (1000) comprenant un composant non fiable (1001), un composant intermédiaire (1002), et un composant fiable (1003), dans lequel le composant non fiable (1001) comprend une application et un noyau de système d'exploitation, OS, le composant fiable (1003) comprend une base informatique fiable et un composant d'actif critique, le composant d'actif critique comprend des données critiques et/ou un code critique appartenant à l'application et au noyau d'OS et qui est/sont utilisé(es) pour fournir un service de sécurité, le composant intermédiaire (1002) assure l'isolation de sécurité entre le composant fiable (1003) et le composant non fiable (1001), le composant intermédiaire (1002) comprend une première instruction système, la première instruction système est utilisée pour obtenir une première adresse, et la première adresse pointe vers le composant fiable (1003) ;
le composant non fiable (1001) est configuré pour envoyer une première demande, et la première demande est utilisée pour accéder au composant fiable (1003) ;
le composant intermédiaire (1002) est configuré pour : recevoir la première demande, exécuter la première instruction système pour obtenir la première adresse et envoyer la première demande au composant fiable (1003) sur la base de la première adresse ; et
le composant fiable (1003) est configuré pour réaliser un traitement sur la base de la première demande ;
l'appareil étant **caractérisé en ce que** :
le noyau d'OS est un noyau d'OS de plan de données ;
la première adresse est une première adresse virtuelle et la première instruction système est utilisée pour obtenir la première adresse virtuelle à partir d'un premier registre système d'un dispositif de réseau ; et
la première demande comprend une demande d'accès et/ou de modification d'une table de pages d'unité de gestion de mémoire, MMU, d'un OS de plan de données, et la base informatique fiable est configurée pour déterminer, avant que le composant fiable (1003) ne réalise un traitement sur la base de la première demande, que la demande d'accès et/ou de modification de la table de pages MMU répond à une condition de vérification prédéfinie, dans lequel la condition de vérification comprend :
la demande d'accès à la table de pages MMU ne vise pas à accéder à une première table de pages, dans lequel la première table de pages est utilisée pour mapper le composant fiable (1003) ; et
la demande de modification de la table de pages MMU ne vise pas à modifier un attribut d'autorisation d'accès de la table de pages MMU, dans lequel l'attribut d'autorisation d'accès de la table de pages MMU satisfait au fait que l'autorisation d'accès d'une zone de code à laquelle la table de pages MMU est mappée est non inscriptible, et que l'autorisation d'accès d'une zone de données à laquelle la table de pages MMU est mappée est non exécutable.

8. Appareil (1000) selon la revendication 7, dans lequel la première instruction système est utilisée pour obtenir une première adresse virtuelle à partir d'un premier registre système d'un dispositif de réseau, et comprend :
la première instruction système est utilisée pour stocker, dans un registre à usage général du dispositif de réseau, la première adresse virtuelle lue dans le premier registre système, et
après la réalisation par le composant fiable (1003) du traitement sur la base de la première demande, le composant intermédiaire (1002) est configuré pour :
recevoir une seconde demande envoyée par le composant fiable (1003), dans lequel la seconde demande est utilisée pour renvoyer un résultat de traitement du composant fiable (1003) au composant non fiable (1001) ; et
supprimer la première adresse virtuelle stockée dans le registre à usage général et envoyer le résultat de traitement au composant non fiable (1001).

9. Appareil selon la revendication 7 ou 8, dans lequel le fait que la première demande est utilisée pour accéder au composant fiable (1003) comprend : la première demande est utilisée pour accéder au composant d'actif critique ; et
le fait que le composant fiable (1003) réalise un traitement sur la base de la première demande comprend :
le traitement de la première demande sur la base des données critiques et/ou du code critique dans le composant d'actif critique.

10. Appareil selon l'une quelconque des revendications 7 à 9, dans lequel un second registre système du dispositif de réseau pointe vers une table de vecteurs d'interruption configurée par la base informatique fiable, la table de vecteurs d'interruption est utilisée pour indiquer un programme de traitement correspondant à une interruption, et le composant non fiable (1001) est configuré pour :
si l'interruption se produit dans l'OS de plan de données, déterminer, sur la base de la table de vecteurs d'interruption, un composant dont l'exécution est interrompue ; et
si le composant dont l'exécution est interrompue est le composant non fiable (1001), exécuter, sur la base d'une indication de la table de vecteurs d'interruption, un programme de service d'interruption correspondant à l'interruption ; ou
si le composant dont l'exécution est interrompue est le composant fiable (1003) et/ou le composant intermédiaire (1002), avant d'exécuter un programme de service d'interruption correspondant à l'interruption, envoyer une demande de traitement d'interruption sur la base d'une indication de la table de vecteurs d'interruption, dans lequel la première demande comprend la demande de traitement d'interruption, et le fait que le composant fiable (1003) réalise un traitement sur la base de la première demande comprend : la base informatique fiable stocke un contexte d'interruption sur la base de la demande de traitement d'interruption.

11. Appareil selon la revendication 10, dans lequel
le résultat de traitement du composant fiable (1003) comprend un résultat de traitement de la base informatique fiable pour le contexte d'interruption ; et/ou
la première demande comprend également une demande de retour d'interruption.

12. Appareil selon l'une quelconque des revendications 7 à 11, dans lequel l'appareil comprend également un chargeur, et le chargeur est configuré pour :
charger un fichier exécutable de l'appareil de traitement de données dans une mémoire du dispositif de réseau pendant l'initialisation du dispositif ;
lors du démarrage du dispositif, le chargeur charge un contenu du composant fiable (1003) sur la première adresse virtuelle en utilisant une adresse virtuelle sélectionnée aléatoirement dans un espace d'adressage virtuel de l'appareil de traitement de données comme première adresse virtuelle, et stocke la première adresse virtuelle dans le premier registre système, et
la base informatique fiable est également configurée pour :
initialiser la table de pages MMU, mapper l'adresse virtuelle dans l'espace d'adressage virtuel à la mémoire et configurer l'attribut d'autorisation d'accès de la table de pages MMU, dans lequel l'attribut d'autorisation d'accès de la table de pages MMU satisfait au fait que l'autorisation d'accès de la zone de code à laquelle la table de pages MMU est mappée est non inscriptible, et que l'autorisation d'accès de la zone de données à laquelle la table de pages MMU est mappée est non exécutable.

13. Support de stockage lisible par ordinateur, dans lequel le support de stockage lisible par ordinateur stocke un programme informatique, et lorsque le programme informatique fonctionne sur un ordinateur, l'ordinateur est capable de réaliser le procédé selon l'une quelconque des revendications 1 à 6.
